# NEUE EUROPÄISCHE PATENTSCHRIFT

(11) **EP 1 332 334 B2**
(45) Veröffentlichungstag und Bekanntmachung des Hinweises auf die Entscheidung über den Einspruch: **24.03.2010**
(45) Hinweis auf die Patenterteilung: 04.05.2005
(21) Anmeldenummer: 01989579.6
(22) Anmeldetag: 05.12.2001
(51) Int. Cl.: G01B 11/25, G01M 17/02, G01N 21/88

(54) **MESSEINRICHTUNG ZUR BERÜHRUNGSLOSEN MESSUNG VON REIFEN**
MEASURING DEVICE FOR CONTACTLESS MEASUREMENT OF TYRES
DISPOSITIF DE MESURE SERVANT A EFFECTUER DES MESURES SANS CONTACT SUR DES PNEUMATIQUES

(30) Priorität: 14.12.2000 DE 10062254
(43) Veröffentlichungstag der Anmeldung: 06.08.2003
(73) Patentinhaber: Fraunhofer-Gesellschaft zur Förderung der angewandten Forschung e.V., 80686 München (DE)
(72) Erfinder: HASSLER, Ulf, 91560 Heilsbronn (DE); SCHMITT, Peter, 91058 Erlangen (DE); KOSTKA, Günther, 91056 Erlangen (DE)
(74) Vertreter: Schoppe, Fritz
(86) Internationale Anmeldenummer: PCT/EP2001/014292
(87) Internationale Veröffentlichungsnummer: WO 2002/048648

(56) Entgegenhaltungen:
- EP-A- 0 328 384
- EP-B- 0 328 384
- DE-C- 19 849 793
- GB-A- 2 351 346
- US-A- 5 054 918
- PATENT ABSTRACTS OF JAPAN vol. 012, no. 473 (P-799), 12. Dezember 1988 (1988-12-12) & JP 63 191947 A (TOYO TIRE & RUBBER CO LTD), 9. August 1988 (1988-08-09)
- PATENT ABSTRACTS OF JAPAN vol. 017, no. 609 (P-1640), 9. November 1993 (1993-11-09) & JP 05 187843 A (KOBE STEEL LTD), 27. Juli 1993 (1993-07-27)

## Beschreibung

Die vorliegende Erfindung bezieht sich auf die industrielle Qualitätskontrolle an Produkten mit schwach strukturierten Oberflächen hinsichtlich der Überprüfung auf Fabrikationsfehler und insbesondere auf Verfahren und Vorrichtungen zum Charakterisieren einer Oberfläche, zum Ermitteln einer Formanomalie einer Oberfläche und zum Charakterisieren einer örtlich begrenzten Unebenheit auf einer Oberfläche.

Bei der industriellen Qualitätskontrolle an Produkten mit schwach strukturierten (reliefartigen) Oberflächen hinsichtlich der Überprüfung auf Fabrikationsfehler, die sich durch eine spezifische Anomalie der Oberflächenformung abzeichnen, können berührungslose Echtzeit-Vermessungsverfahren eingesetzt werden. Insbesondere bei der Charakterisierung von Fahrzeugreifen auf Seiten- oder Höhenschlag ist es wesentlich, Beulen oder Einschnürungen einerseits und Aufschriften bzw. auf den Reifen aufgebrachte Marken andererseits zu erkennen, damit sie nicht die Charakterisierung des Fahrzeugreifens stören.

Die besondere Schwierigkeit bei der Detektion von Seiten- oder Höhenschlag besteht darin, daß auf den zu prüfenden Flächen in der Regel gleichzeitig erhabene, reliefartige Schrift- oder Markierungszeichen aufgebracht sind, und daß die Anomaliestruktur im gleichen oder höheren Höhenintervall liegt wie die Schrift, wobei die zu prüfenden Reifenoberfläche zusätzlich eine torusförmige Krümmung aufweisen kann. Dies hat zur Folge, daß die korrekte Vermessung der Höhenanomalie durch die Anwesenheit der Schriftstrukturen verfälscht und in vielen Fällen sogar verhindert wird.

Bei der Produktion von Fahrzeugreifen kann es zu Herstellungsfehlern beim inneren Aufbau kommen, die die mechanischen Eigenschaften und dadurch das Betriebsverhalten signifikant beeinflussen. Eine Aussonderung solcher Produkte ist notwendig. Derartige Produktionsfehler können bei Fahrzeugreifen an den Seiten- oder Laufflächen auftreten und äußern sich in der Regel durch Abweichungen gegenüber einer radialsymmetrischen Oberfläche. Die Ausdehnungen solcher Störungen sind im allgemeinen höher als die gleichzeitig vorhandenen konstruktiven Strukturen auf der Oberfläche wie Schrift- oder Markierungsreliefs.

Bisher werden für diese Prüfaufgabe im industriellen Bereich vorwiegend kapazitive Meßverfahren eingesetzt, die jedoch aufgrund der im folgenden genannten Gründe nur eine unbefriedigende Prüftiefe leisten können. Während der Bewegung der Oberfläche, d. h. während einer Drehung des Reifens, wird über eine Änderung der Kapazität eines Meßsensors eine Abstandsänderung zwischen der Meßelektrode und der Reifenoberfläche ermittelt. Der Nachteil liegt in seiner geometrisch bedingten relativ groben lateralen Ortsauflösung, die zur Folge hat, daß nur eine geringe Anzahl von Spuren pro Breite des Prüfbereichs sinnvoll zu vermessen ist. Das Meßsignal enthält keine ausreichende Information über den genauen Verlauf einer Höhenauslenkung, so daß anwesende kurzreichweitige Strukturen (Schrift-Relief) nicht erkannt und für die weitere Berechnung ausgeblendet werden können.

Daneben werden von bestimmten Reifen-Herstellern taktile (berührende) Meßverfahren eingesetzt, die jedoch bestimmte Bedingungen an die Geometrie der Meßobjekte stellen. Die Einschränkung besteht darin, daß auf der zu untersuchenden Oberfläche eine explizite Meßspur vorgesehen werden muß, die keinerlei konstruktive Strukturen aufweisen darf und deren Mindestbreite die Geometrie des Meßfühlers und mögliche Ungenauigkeiten beim Rundlauf während der Aufnahme beinhalten muß. Die Meßmethode ist unter diesen Umständen in der Lage, relativ zuverlässige Meßwerte zu ermitteln. Allerdings stellt sie aufgrund der geometrischen Einschränkungen und die dagegen stehende derzeitige Tendenz zu sehr schmalen Reifenseitenflanken (Niederquerschnittreifen) keine befriedigende Meßmethode für den allgemeinen Einsatz dar.

Eine bekannte Methode zur Vermessung von Oberflächenkonturen ist die optische Triangulation. Dabei wird ein Lichtstrahl (i. allg. ein Laserstrahl) auf die zu vermessende Oberfläche fokussiert und die diffus reflektierte Strahlung optisch auf einem Sensor mit einer Vielzahl von Bildelementen (Pixel) abgebildet. Bleibt die Geometrie zwischen Kamera und Lichtstrahl unverändert, so kann aus einer Verschiebung des projizierten Lichtpunktes auf der Sensorfläche die Veränderung der räumlichen Lage des Lichtschnittpunktes auf dem zu vermessenden Objekt entlang des Strahls ermittelt werden. Eine solche Messung ist zunächst punktuell. Soll ein ganzer Bereich geprüft werden, so wird das Prüfobjekt unter der Triangulator-Meßanordnung hindurchbewegt und die Meßwerte in schneller Folge aufgezeichnet, so daß eine schmale kreisförmige Spur auf der Reifenseitenfläche erfaßt wird.

In jüngster Zeit mit der zunehmenden Verfügbarkeit leistungsfähiger Laserlichtquellen und optischer Sensoren werden Beulen-Prüfsysteme auf der Basis der Lasertriangulation angeboten. Diese Systeme sind in der Lage, räumlich hochaufgelöst eine bestimmte Meßspur auf der Reifenoberfläche aufzunehmen und auf potentielle Formanomalien hin zu bewerten. Da jedoch diese Verfahren konstruktive Schriftstrukturen nicht zuverlässig erkennen können, wird die Höhe der Formanomalien um die Höhe der regulären Schriftstrukturen verfälscht. Hinzu kommt das Problem, daß die maximale Amplitude etwaiger auftretender Formanomalien nicht notgedrungen auf der gewählten Meßspur liegt.

Eine ebenfalls bekannte Weiterentwicklung der beschriebenen Triangulation, ist die Abtastung der Oberfläche mittels Fächerstrahl und Flächensensor (Lichtschnittverfahren). Über den auf den Sensor projizierten Lichtstrich (Schnittlinie zwischen Fächerstrahl und Objektoberfläche) kann die Höheninformation entlang der Meßlinie auf der Oberfläche ermittelt werden. Durch Bewegung des Objekts wird zeilenweise die Höh eninformation entlang dieser Linie aufgezeichnet und anschließend zu einem vollständigen 2D-Höhenbild mit der entsprechenden Höheninformation in jedem Bildpunkt zusammengesetzt. Bei hinreichender räumlicher und zeitlicher Auflösung der Messung enthält der so erzeugte Datensatz die Höheninformation aus einem gesamten Oberflächenbereich einschließlich der Fehler- sowie Schrift- bzw. Markierungsstrukturen. Da allerdings Schrift- und Fehlerstrukturen im selben Höhenbereich liegen und diese Strukturen zudem auf einer im Verhältnis zu diesen Strukturen stark gekrümmten Oberfläche liegen, ist es auch mittels der so gewonnenen Höhenbilder ohne spezielle Datenverarbeitungsmethoden nicht möglich, auf einfache Art und Weise eine genaue vermessung der Oberfläche bei Unterdrückung der Reliefstrukturen zu erzielen.

Die WO 00/25088 offenbart Verfahren und Vorrichtungen zur Ermittlung von Unebenheiten in einer gewölbten Oberfläche, wie z. B. einer Reifenseitenwand, unter Verwendung einer Bandpassfilterung. Insbesondere wird von der Reifenseitenwand eine dreidimensionale Oberflächendarstellung erzeugt. Hierauf wird die Wölbung aus der dreidimensionalen Darstellung der Oberfläche extrahiert, und die Kanten der Strukturierung, wie z. B. einer Schrift oder von Markierungszeichen, werden geglättet, um eine wölbungslose Darstellung der gewölbten Oberfläche zu erhalten. Die Oberfläche enthält nun noch die potentiell vorhandene Unebenheit, wie z. B. eine Einschnürung oder eine Beule auf der Reifenseitenwand, die Kanten der Aufschrift sind jedoch nun geglättet. Anschließend wird die wölbungslose Darstellung mit einer Schwelle verglichen, um flächige Bereiche der wölbungslosen Darstellung zu ermitteln, die eine vorbestimmte Beziehung zu dem Schwellenwert haben. Schließlich werden die Flächen der ermittelten Bereiche beurteilt, wobei ein Bereich als Unebenheit erfaßt wird, wenn seine Fläche größer als eine vorbestimmte Fläche ist. Die reliefartigen Schriftstrukturen auf dem Reifen spielen bei dem Beurteilen der Flächen im wesentlichen keine Rolle mehr, da die Kanten dieser Aufschriften geglättet worden sind, und damit die Höhen der Aufschriften derart reduziert worden sind, daß sie überhaupt nicht mehr über dem Schwellenwert sind, oder daß sie lediglich noch eine kleine Fläche über dem Schwellenwert haben. Diese kleinen Flächen können bei der Beurteilung der Flächengröße über dem Schwellenwert ohne weiteres von den Flächen unterschieden werden, welche auf Beulen oder Einschnürungen zurückgehen. Bevorzugterweise wird zum Extrahieren der Oberfläche und zum Glätten der Kanten ein Bandpaßfilter verwendet, das eine obere und eine untere Grenzfrequenz hat, wobei die untere Grenzfrequenz so eingestellt ist, daß die Wölbung unterdrückt wird, und wobei die obere Grenzfrequenz so eingestellt wird, daß die Kanten geglättet werden, während die Unebenheiten als Beulen oder Einschnürungen im wesentlichen nicht beeinträchtigt werden.

Obgleich dieses Verfahren sicher Beulen bzw. Einschnürungen von Aufschriften der Reifenseitenwand unterscheiden kann, ist es zum Feststellen eines Seitenschlags eines Reifens oder zum Feststellen eines Höhenschlags eines Reifens nicht einsetzbar, da die Schriftstrukturen einer Tiefpaßfilterung unterzogen werden, was wiederum bedeutet, daß eine Mittelung über die auf dem Reifen vorhandenen Schrift-Strukturen durchgeführt wird. Damit werden an Stellen, wo Aufschriften auf dem Reifen vorhanden sind, zu hohe Höhenwerte erzeugt, was insbesondere dann ein Problem ist, wenn die Schrift nicht gleichmäßig über dem Umfang des Reifens verteilt ist. So könnte der "Rest" einer Aufschrift nach der Tiefpaßfilterung der dreidimensionalen Oberflächendarstellung einen Seitenschlag suggerieren, obwohl gar kein Seitenschlag vorhanden ist.

Insbesondere bei der Reifenherstellung besteht jedoch die Anforderung, daß nur die Reifen bei der Qualitätsüberprüfung ausgemustert werden, die tatsächlich einen derart hohen Seitenschlag haben, daß derselbe oberhalb eines Grenzwerts liegt, wobei ein solcher Grenzwert üblicherweise von den Abnehmern der Reifen, also beispielsweise von der Automobilindustrie, gesetzt wird. Werden Reifen ausgemustert, denen ein falscher Seitenschlag aufgrund der auf denselben vorhandenen Schriftstrukturen zugeschrieben wird, so werden Reifen ausgemustert, die eigentlich in Ordnung sind, was bezogen auf die Gesamtkosten zu einer Erhöhung der Kosten pro Reifen führt.

Alternativ könnten ausgemusterte Reifen noch einmal manuell auf einen Seitenschlag untersucht werden, um herauszufinden, ob sie tatsächlich einen zu hohen Seitenschlag haben, oder ob es sich hier nur um eine Fehlentscheidung handelt. Wird ein solches zweistufiges Ausmusterungsverfahren durchgeführt, so fallen wieder zusätzliche Kosten an, was wieder zu einer Verteuerung eines Reifens beiträgt.

Die Aufgabe der vorliegenden Erfindung besteht darin, ein sicheres Konzept zum Charakterisieren einer Oberfläche zu schaffen, welche eine örtlich begrenzte Unebenheit aufweisen kann.

Diese Aufgabe wird durch ein Verfahren zum Charakterisieren einer Oberfläche nach Patentanspruch 1, durch ein Verfahren zur Ermittlung einer Formanomalie einer Oberfläche nach Patentanspruch 6 oder 17, durch ein Verfahren zum Charakterisieren einer örtlich begrenzten Unebenheit nach Patentanspruch 11 oder 18, durch eine Vorrichtung zum Charakterisieren einer Oberfläche nach Patentanspruch 14, durch eine Vorrichtung zum Ermitteln einer Formanomalie einer Oberfläche nach Patentanspruch 15 oder 19 oder durch eine Vorrichtung zum Charakterisieren einer örtlich begrenzten Unebenheit nach Patentanspruch 16 oder 20 gelöst.

Der vorliegenden Erfindung liegt die Erkenntnis zugrunde, daß zum Charakterisieren einer Oberfläche, die eine örtlich begrenzte Unebenheit aufweist, diese örtlich begrenzte Unebenheit detektiert werden muß und aus einer Darstellung der Oberfläche eliminiert werden muß, um eine lückenhafte Oberflächendarstellung zu erhalten, welche die Oberfläche ohne die örtlich begrenzte Unebenheit charakterisiert. Hierzu wird zunächst eine Höhenlinie der Oberfläche als Funktion einer Ortsvariablen aufgenommen. Dann wird eine Höhenabweichung in der Höhenlinie aufgrund der örtlich begrenzten Unebenheit detektiert, woraufhin schließlich die detektierte Höhenabweichung aus der Höhenlinie eliminiert wird, so daß sich eine lückenhafte Höhenlinie als Funktion der Ortsvariablen ergibt, die die Oberfläche ohne die örtlich begrenzte Unebenheit charakterisiert. Wird dieses Verfahren für eine Mehrzahl von nebeneinander liegenden Höhenlinien durchgeführt, so entsteht nach und nach eine dreidimensionale Darstellung der Oberfläche, die jedoch nicht mehr durch örtlich begrenzte Unebenheiten gestört ist. Wenn das Beispiel der Reifen betrachtet wird, so stellt die erhaltene dreidimensionale Darstellung der Reifenseitenwand die eigentliche Form des Reifens ohne Beulen bzw. Einschnürungen oder aber Aufschriften als Beispiele für örtlich begrenzte Unebenheiten dar. Anhand dieser lückenhaften Darstellung kann nun ohne weiteres ermittelt werden, ob der Reifen einen Seitenschlag hat, ohne daß diese Ermittlung noch durch Aufschriften, Beulen oder Einschnürungen gestört wird, da dieselben eliminiert worden sind.

Es sei darauf hingewiesen, daß das erfindungsgemäße Konzept vorzugsweise nicht nur eindimensional sondern zweidimnsional ausgeführt wird, wodurch die Detektionsgenauigkeit wesentlich erhöht werden kann. Hierzu werden mehrere nebeneinanderliegende Höhenlinien/Spuren des Reifens aufgenommen und dann gemeinsam ausgewertet, indem zweidimensionale Gebiete anstatt von eindimensionalen Strecken wie im allgemeinen eindimensionalen Fall hinsichtlich ihrer Höhe/Fläche/Umgebung/Lage etc. ausgewertet bzw. untersucht werden. Die Höhe eines Punktes einer zweidimensionalen Darstellung ist dann gewissermaßen die dritte Dimension.

Die lückenhafte Darstellung der dreidimensionalen Oberfläche kann auf verschiedene Arten und Weisen eingesetzt werden, um die Oberfläche zu untersuchen.

Soll beispielsweise der Seitenschlag des Reifens charakterisiert werden, so kann eine analytische Funktion an die lückenhafte Höhenliniendarstellung der dreidimensionalen Oberfläche angefittet werden, wobei die Amplitude der erhaltenen Fitting-Funktion ein quantitatives Maß für den Reifenseitenschlag ergibt.

Alternativ können die Lücken einfach beispielsweise durch eine lineare, eine kubische oder eine anders geartete Interpolation aufgefüllt werden, so daß eine Idealdarstellung des Reifens ohne Aufschrift und Einschnürung bzw. Beule, also ohne örtlich begrenzte Unebenheiten, erhalten wird.

Diese Idealdarstellung kann dann von einer zweidimensionalen Aufnahme des Reifen mit örtlich begrenzten Unebenheiten subtrahiert werden, so daß sich lediglich noch, ohne Bandpaßfilterung und dgl., eine Aufzeichnung der örtlich begrenzten Unebenheiten ergibt, die nicht mehr durch die Wölbung des Reifens beeinträchtigt ist.

Damit kann aufgrund der örtlich begrenzten Unebenheiten mittels einfacher Algorithmen entschieden werden, ob es sich um Aufschrift oder um Beulen bzw. Einschnürungen handelt, um einen Reifen, wenn er z. B. zu starke Beulen bzw. Einschnürungen hat, auszusortieren.

Soll der Höhenschlag eines Reifens bestimmt werden, so wird eine Höhendarstellung der Lauffläche aufgenommen. Die lückenhafte Höhendarstellung der Lauffläche besteht dann in einer Laufflächendarstellung, bei der die Profileinschnitte eliminiert sind, so daß aufgrund der lückenhaften Höhendarstellung ohne weiteres bestimmt werden kann, ob der Reifen einen Höhenschlag hat, also gewissermaßen eine Ellipsoidform oder etwas ähnliches hat, oder ob er keinen Höhenschlag hat, also eine ideale Zylinderform aufweist.

Generell kann das erfindungsgemäße Konzept, das eine Darstellung bzw. Charakterisierung einer Oberfläche liefert, die keine örtlich begrenzten Unebenheiten mehr aufweist, immer dann eingesetzt werden, wenn entweder die Oberfläche an sich, also ohne die örtlich begrenzten Unebenheiten, charakterisiert werden soll, oder wenn die örtlich begrenzten Unebenheiten ohne Einfluß der Oberfläche selbst charakterisiert werden sollen.

Bevorzugte Ausführungsbeispiele der vorliegenden Erfindung werden nachfolgend bezugnehmend auf die beiliegenden Zeichnungen detailliert erläutert. Es zeigen:
- Fig. 1: eine Blockdiagrammdarstellung der erfindungsgemäßen Vorrichtung zum Charakterisieren einer Oberfläche;
- Fig. 2: eine Draufsicht auf eine Reifen-Seitenflanke mit örtlich begrenzten Unebenheiten und einer aufgenommenen Spur;
- Fig. 3: eine Höhenlinie, die sich durch Aufzeichnen der Spur von Fig. 2 ergeben könnte;
- Fig. 4: eine lückenhafte Höhenlinie nach einer Detektion aufgrund der örtlich begrenzten Unebenheiten in der Höhenlinie;
- Fig. 5: eine Blockdiagrammdarstellung einer erfindungsgemäßen Vorrichtung zum Ermitteln einer Formanomalie einer Oberfläche zur Verwendung der lückenhaften Höhenlinie;
- Fig. 6: eine Blockdiagrammdarstellung einer erfindungsgemäßen Vorrichtung zum Charakterisieren einer örtlich begrenzten Unebenheit, bei der die lückenhafte Höhenlinie verwendet wird; und
- Fig. 7a und 7b: eine Flußdiagrammdarstellung zum Darstellen eines zweidimensionalen Verfahrens zum Detektieren von örtlich begrenzten Unebenheiten.

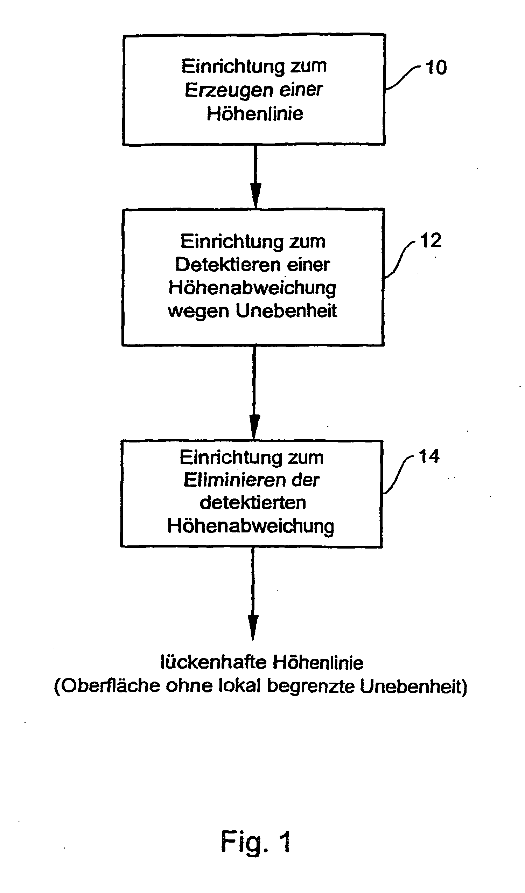

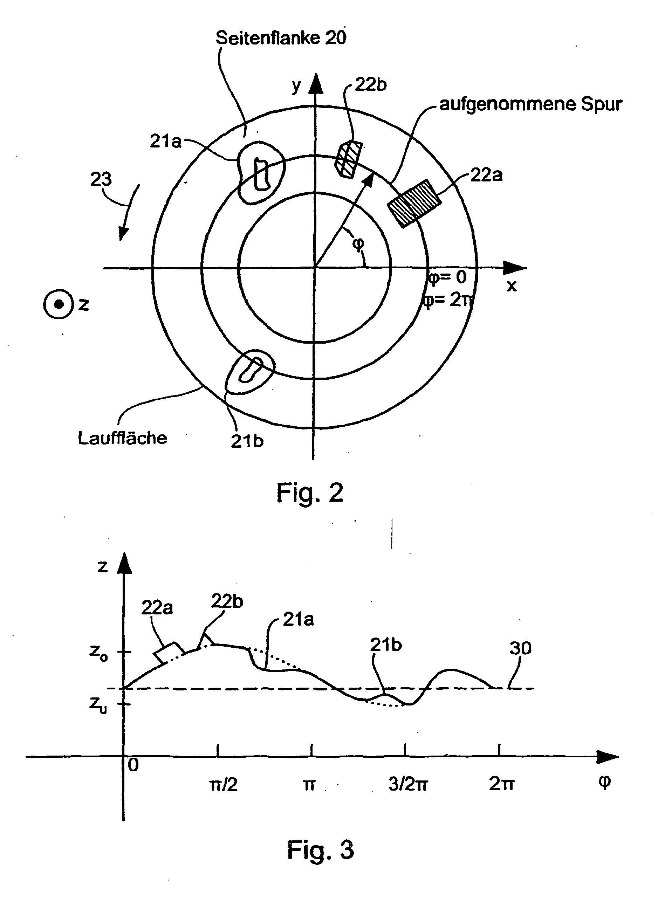

Nachfolgend wird bezugnehmend auf Fig. 1 eine Vorrichtung zum Charakterisieren einer Oberfläche, die eine örtlich begrenzte Unebenheit aufweist, beschrieben. Die örtlich begrenzte Unebenheit kann beispielsweise, wenn eine Reifenseitenfläche betrachtet wird, eine Aufschrift auf dem Reifen, eine Prüfstruktur oder aber eine Beule oder Einschnürung in dem Reifen sein. zunächst wird mittels einer Einrichtung 10 zum Erzeugen einer Höhenlinie eine solche Höhenlinie beispielsweise durch optische oder aber auch kapazitive Verfahren von der Reifenseitenflanke aufgenommen. Hierzu wird auf Fig. 2 Bezug genommen.

Fig. 2 zeigt eine Draufsicht auf einen in der xy-Ebene befindlichen Reifen. Der Reifen umfaßt eine Seitenflanke 20, auf der örtlich begrenzte Unebenheiten vorhanden sind, wie z. B. eine Beule oder Einschnürung 21a, 21b oder eine reliefartige örtlich begrenzte Unebenheit 22a, 22b. Wird der Reifen um den Ursprung des xy-Koordinatensystems gedreht, wie es durch einen Pfeil 23 dargestellt ist, und wird mittels eines oberhalb der Seitenflanke 20 angebrachten Sensors (in Fig. 2 nicht gezeigt) während der Drehung des Reifens eine schnelle Folge von Einzelbildern aufgenommen, so entsteht eine Höhenlinie des Reifens, wie sie in Fig. 3 dargestellt ist. Die Höhenlinie des Reifens umfaßt zunächst die beiden kantenartigen Aufschriften sowie die Einschnürung 21a und die Beule 21b. Die Höhenlinie startet bei einer Ortsvariablen 0 und endet bei einer Ortsvariablen 2φ, wobei der z-Wert, also die Höhe der Höhenlinie, bei der Ortsvariablen 0 und der Ortsvariablen 2φ denselben Wert hat, da sich der Reifen dann um eine Umdrehung gedreht hat.

In Fig. 3 ist ein Reifen dargestellt, der einen starken Seitenschlag hat, nämlich einen Maximalseitenschlag in positiver Richtung, der mit zₒ dargestellt ist, und einen Maximalseitenschlag nach unten, der mit zᵤ dargestellt ist. Hätte der Reifen keinen Seitenschlag, so müßte die Höhenlinie abgesehen von den Beulen, Einschnürungen und Aufschriften, genau der geraden Linie, die in Fig. 3 gestrichelt eingezeichnet ist und mit dem Bezugszeichen 30 bezeichnet ist, entsprechen.

Würde nun die in Fig. 2 dargestellte Höhenlinie durch das in der WO 00/25088 dargestellte Konzept bandpaßgefiltert werden, so würde sich eine falsche Darstellung des Seitenschlags ergeben, da der maximale positive Seitenschlag, also der Wert zₒ, durch die Markierung 22b vergrößert werden würde, während der untere Seitenschlag zᵤ durch die Beule 21b geringer als tatsächlich vorhanden dargestellt werden würde.

Erfindungsgemäß wird daher eine Einrichtung 12 zum Detektieren einer Höhenabweichung aufgrund einer örtlich begrenzten Unebenheit (Fig. 1) vorgesehen. Diese Detektion der Beulen bzw. Unebenheiten 21a, 21b (Fig. 3) kann beispielsweise mittels dem in der WO 00/25088 beschriebenen Verfahren erfolgen. Die Detektion der Aufschriften 22a, 22b, also der reliefartigen Strukturen mit starken Kanten, könnte beispielsweise mittels eines Gradientenverfahrens bewerkstelligt werden, welches Bereiche erkennt, die durch hohe positive/negative Steigungen eingegrenzt sind.

Alternativ könnte, wenn es sich bei der zu untersuchenden Oberfläche um eine im allgemeinen ebene Oberfläche handelt, eine Höhenschwelle vorgesehen werden. Wenn das erfindungsgemäße Verfahren zum Charakterisieren der Oberfläche jedoch zur Bestimmung eines Reifenseitenschlags bzw. Reifenhöhenschlags eingesetzt wird, so wird es bevorzugt, die kantenartigen Reliefstrukturen mittels eines Gradientenverfahrens zu bestimmen, und die Beulen bzw. Einschnürungen mittels des bekannten Verfahrens, das in der WO 00/25088 beschrieben ist, zu erfassen.

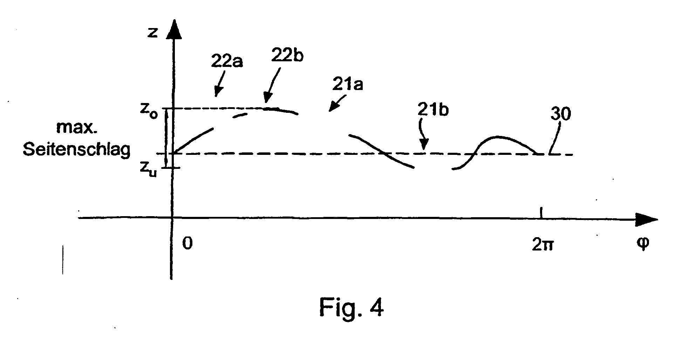

Schließlich wird durch eine Einrichtung 14 zum Eliminieren der detektierten Höhenabweichung die in Fig. 3 dargestellte Höhenlinie verarbeitet, indem die detektierten Höhenabweichungen eliminiert werden. Es ergibt sich damit eine lückenhafte Höhenlinie, welche für das in Fig. 3 gezeigte Beispiel in Fig. 4 dargestellt ist.

Die in Fig. 4 dargestellte lückenhafte Höhenlinie stellt nunmehr die Oberfläche dar, jedoch ohne örtlich begrenzte Unebenheiten. Diese lückenhafte Höhenlinie kann nunmehr, wie es nachfolgend dargestellt werden wird, für verschiedenartigste Anwendungen eingesetzt werden, um entweder eine Formanomalie der Oberfläche zu bestimmen, bei der die örtlich begrenzten Unebenheiten nicht von Interesse sind, oder aber um den allgemeinen "Grundverlauf" der Oberfläche zu eliminieren, um die örtlich begrenzten Unebenheiten an sich zu klassifizieren.

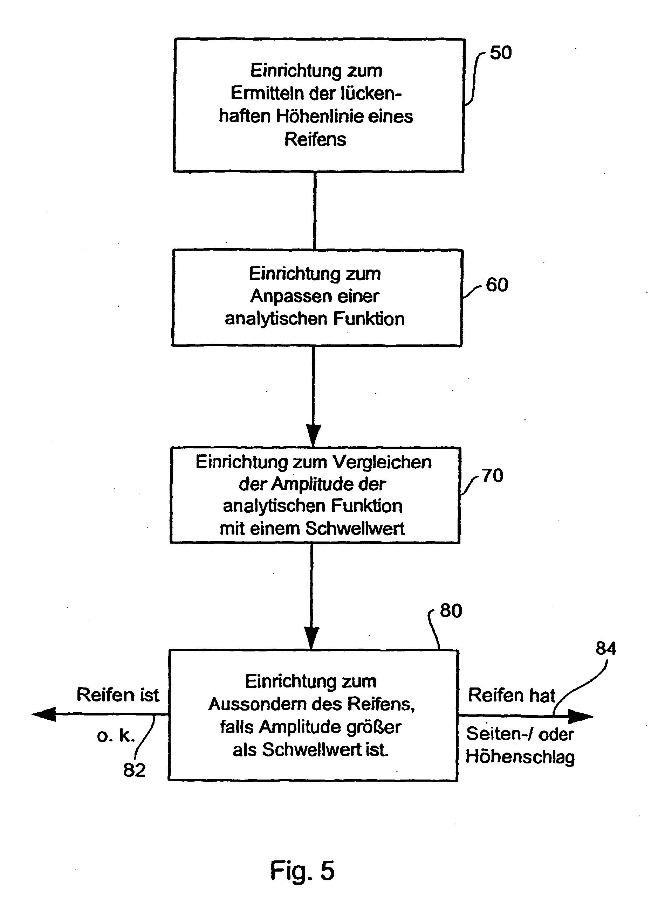

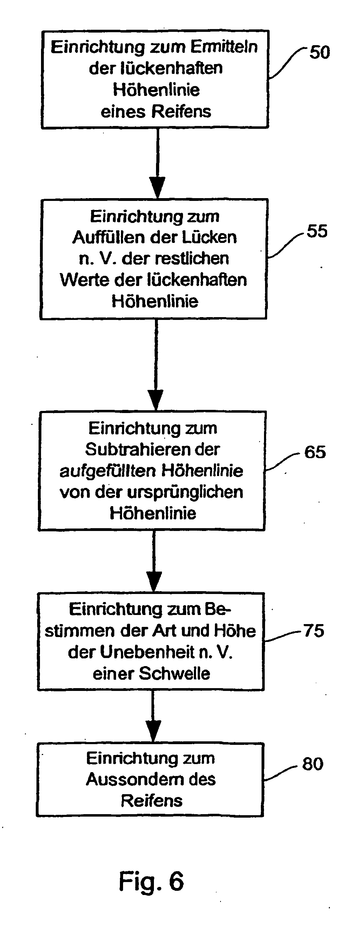

Bevor auf die Fig. 5 und 6 eingegangen wird, welche sich darauf beziehen, wie die lückenhafte Höhenlinie einer Reifenoberfläche entweder zum Feststellen eines Seiten- oder Höhenschlags- oder aber zur Unterscheidung von Beulen von Aufschrift eingesetzt werden kann, wird im nachfolgenden das Aufzeichnen der Höhenlinie, das durch die Einrichtung 10 von Fig. 1 erreicht wird, anhand des bevorzugten optischen triangolometrischen Prinzips beschrieben.

Hier wird zunächst ein Lichtfächerstrahl (Laser mit spezieller asphärischen Linsenoptik, 30mW) auf die zu untersuchende Oberfläche gerichtet. Die diffus reflektierte Strahlung wird über ein geeignetes Linsensystem auf eine Sensorfläche projiziert. Aus der bekannten Geometrie der Meßanordnung wird aus der Lage der projizierten Linie auf der Sensorfläche die Form der bestrahlten Oberfläche berechnet.

Die Geometrie der Anordnung von Lichtfächerstrahl und Meßkamera sowie die Pixelauflösung der Kamera bestimmen die räumliche Auflösung der Messung in lateraler und vertikaler Richtung. Die Geometrie wird so gewählt, daß sowohl der zu untersuchende Reifenbereich auf dem Sensor abgebildet wird, d. h. 5 cm Meßbereich in radialer Richtung mit ca. 0,5 mm Auflösung, und daß gleichzeitig eine genügende Höhenauflösung von ca. 75µm erreicht wird, um die zu detektierenden Fehlerstrukturen, die im Höhenbereich von >= 0,55 mm liegen, hinreichend genau darzustellen.

Die Ortsauflösung der Vermessung in tangentialer Richtung ist abhängig von der Bildwiederholrate der Bildkamera. Die tangentiale Ortsauflösung liegt bei 1 mm. Ein Reifen muß innerhalb von 1 sec geprüft werden. Daraus ergibt sich bei einem angenommenen Durchmesser des Prüfbereichs von beispielsweise 60 cm eine Meßrate von 1900 Hz. Speziell für diese Prüfaufgabe geeignete Sensoren werden von der Fa. IVP (Typ MAPP 2500 PCI) gefertigt. Mittels einer auf dem Sensorchip integrierten programmierbaren Rechnerarchitektur wird eine spaltenweise Bestimmung der Höheninformation durchgeführt, so daß pro aufgenommenen Sensorbild nur das Auswerteergebnis in Form von einer Zeile auf den Meßrechner übermittelt werden muß.

Die Lichtquellen/Kamera-Anordnung, welche für die vorliegende Erfindung eingesetzt werden kann, kann beispielsweise dieselbe sein, wie sie in der WO 00/25088 beschrieben ist. Eine geeignete Kamera hat typischerweise ein staubdichtes Gehäuse, wobei die Meßfenster mittels Luftspülung von Staub freigehalten werden. Der mit einer solchen Lichtquellen/Kamera-Anordnung realisierbare Höhenmeßbereich in z-Richtung liegt bei 39 mm. Die Höhenauflösung beträgt 75 µm. Die Breite des Meßbereichs auf der Reifenflanke beträgt beispielsweise 80 mm.

Die gewonnene Höheninformation wird in ein digitales Datenverarbeitungssystem, welches beispielsweise ein Industrie-PC sein kann, mit Anzeige und Bedienfunktion geladen, auf welchem eine Reihe von Bildverarbeitungsoperationen durchgeführt wird, um eine Detektion und Ausblendung sowohl der Schrift- und Markierungsstrukturen als auch der kurzreichweitigen Unebenheiten zu erreichen. Insbesondere bei einer Reifenvermessung sind eine möglicherweise torusförmige Krümmung der Oberfläche zu berücksichtigen, die zu keiner Fehlvermessung führen darf. Es wird bevorzugt, die Rechenzeit auf maximal 1 sec zu begrenzen, so daß eine Echtzeitvermessung von Reifen möglich ist. Wesentlich ist daher der Einsatz von wenig rechenzeitaufwendigen Bildverarbeitungsalgorithmen.

Bei einem eindimensionalen Ausführungsbeispiel der vorliegenden Erfindung wird zunächst, unmittelbar nach dem Erzeugen einer Höhenlinie eine Detektion und Eliminierung von gestörten Bildpunkten durchgeführt, bei denen aus aufnahmetechnischen Gründen keine Höheninformation ermittelt werden konnte. Anschließend wird zur Detektion der Reliefstrukturen auf dem Reifen vorzugsweise eine Gradientenberechnung und anschließende Schwellwertentscheidungen durchgeführt. Liegt der Betrag des Gradienten bei diesem bevorzugten Ausführungsbeispiel über einem bestimmten Wert, so wird unmittelbar ab diesem Wert der Ortsvariablen eine Eliminierung aktiviert. Es wird ein so langer Bereich eliminiert, bis der Betrag des Gradienten wieder einen Wert oberhalb eines voreingestellten Schwellenwerts hat, das Vorzeichen des Gradienten jedoch umgekehrt ist. Soll eine im Querschnitt rechteckigförmige Aufschrift, wie z. B. die Aufschrift 22a von Fig. 3 eliminiert werden, so wird der Gradient der Höhenlinie unmittelbar am Beginn der Aufschrift einen hohen positiven Steigungswert haben, welcher dann am Plateau der Aufschrift auf Null zurückfällt und dann am Ende der Aufschrift, also an der zweiten Kante der Aufschrift einen hohen negativen Wert hat, um dann, wenn die Aufschrift vorbei ist, wieder auf einen Wert nahe bei Null zu fallen. Ausgeblendet wird dann der Bereich der Ortsvariablen, der zwischen dem hohen positiven und dem hohen negativen Gradienten liegt. Umfaßt der Reifen negative Reliefe, also kantenartige Aussparungen, so wird der erste Gradient, bei dem die Ausblendung aktiviert wird, ein hoher negativer Gradient sein, während der Punkt der Ortsvariablen, an dem die Ausblendung deaktiviert wird, einen hohen positiven Gradienten haben wird.

Es sei darauf hingewiesen, daß anstatt des Gradienten auch die Variation verwendet werden kann. Der Ausdruck "Gradient" bezeichnet einen Vektor, dessen Betrag gleich dem Steigungswert ist, und dessen Richtung gleich der Richtung der Steigung ist. Der Ausdruck "Variation" umfaßt hingegen lediglich den Betrag des Gradientenvektors, ist also ein skalarer Wert und berechnet sich beispielsweise aus der Summe der Differenzenquadrate benachbarter Bildpunkte. Im Sinne der vorliegenden Anmeldung soll der Ausdruck "Variation" derart verstanden werden, daß er auch einen Gradienten umfaßt und insbesondere einen Wert, der eine Aussage hinsichtlich eines Höhenunterschieds zwischen benachbarten Pixeln liefert. Die Variation eines Pixels berechnet sich beispielsweise aus der Summe der Differenzenquadrate zwischen dem betrachteten Pixel, für das die Variation berechnet wird, und sämtlichen z. B. acht benachbarten Pixeln. Selbstverständlich können auch weniger als acht, wie z. B. vier, benachbarte Pixel etc. berücksichtigt werden. Die Variation muß nur angeben, ob eine Höhenänderung von einem Pixel zu einem anderen Pixel vorhanden ist. Die Variation kann also sowohl eindimensional als auch zweidimensional berechnet werden. Der Unterschied besteht lediglich darin, daß im zweidimensionalen Fall nicht nur zwei Nachbarpixel sondern vier oder acht Nachbarpixel existieren.

Für die Detektion der Beulen bzw. Einschnürungen 21a, 21b wird es bevorzugt, das in der WO 00/25088 beschriebene Verfahren einzusetzen, bei dem die Fläche einer Beule bzw. Einschnürung bestimmt wird, woraufhin anhand der Fläche der Beule bzw. Einschnürung bzw. im eindimensionalen Fall, wenn nur eine Spur aufgenommen wird, anhand der Länge ermittelt wird, ob es sich um eine zu berücksichtigende Beule handelt oder nicht.

Erfindungsgemäß werden daher von der weiteren Berechnung, beispielsweise um den Reifenseitenschlag zu erhalten, alle Bereiche mit Reliefstrukturen bzw. Beulen/Einschnürungen ausgeschlossen, wie es anhand der lückenhaften Höhenlinien von Fig. 4 skizziert ist.

Im nachfolgenden wird auf Fig. 5 Bezug genommen, um eine erfindungsgemäße Vorrichtung zur Charakterisierung einer Oberfläche hinsichtlich einer Formanomalie der Oberfläche darzustellen. Hierzu wird mittels einer Einrichtung 50 die lückenhafte Höhenlinie eines Reifens ermittelt. Die Einrichtung 50 hat den in Fig. 1 beschriebenen Aufbau. Anschließend wird unter Verwendung der lückenhaften Höhenlinie gewissermaßen als Stützstellen für das Höhenprofil des Reifens, also der Oberfläche ohne örtlich begrenzte Unebenheit eine analytische Funktion eingefittet, d. h. angepaßt (60). Die Geometrieanomalie der Oberfläche, also der Seitenschlag des Reifens, wird dann aus der Amplitude des gefitteten Höhenverlaufes berechnet. Mittels einer Einrichtung 70, zum Vergleichen der Amplitude der analytischen Funktion mit einem Schwellenwert, wird dann eine Einrichtung 80 zum Aussondern eines Reifens, falls die Amplitude größer als ein Schwellenwert ist, gespeist, um entweder zu entscheiden, daß der Reifenseitenschlag so ist, daß ein Reifen noch verwendet werden kann (Zweig 82), oder um zu entscheiden, daß der Reifen einen Seitenschlag hat, der größer als ein zulässiger Grenzwert ist (Zweig 84).

Als analytische Funktion, welche von der Einrichtung 60 verwendet wird, kann eine beliebige Funktion eingesetzt werden. Es wird jedoch eine harmonische Funktion bevorzugt, welche eine Fourier-Reihe sein kann, mit einer vorbestimmten Anzahl von Oberwellen. Die Ortsfrequenz der Grundwelle wird gleich dem Inversen der Länge der lückenhaften Höhenlinie gesetzt. Die erste Oberwelle hat dann die doppelte Frequenz, die zweite Oberwelle hat die dreifache Frequenz, usw. Es wird darauf hingewiesen, daß mit einer beliebig langen Fourier--Reihe eine beliebige lückenhafte Höhenlinie angepaßt werden kann. Dadurch werden die Lücken der lückenhaften Höhenlinie aufgefüllt. Das Erkennen, ob ein Reifen einen Seitenschlag hat oder nicht, wird jedoch die aufgefüllte Höhenlinie nicht mehr verwendet, sondern die maximale Amplitude der Fitting-Funktion, die eine Überlagerung einer gewissen Anzahl von Fourier-Harmonischen ist.

Alternativ können andere Basisfunktionen verwendet werden, um die lückenhafte Höhenlinie durch eine analytische Fitting-Funktion darzustellen.

Im Nachfolgenden wird auf Fig. 6 Bezug genommen, um eine weitere Anwendungsmöglichkeit der erfindungsgemäß gewonnenen lückenhaften Höhenlinie des Reifens zu zeigen. Die in Fig. 6 dargestellte Vorrichtung zum Charakterisieren einer örtlich begrenzten Unebenheit auf einer Oberfläche umfaßt wieder eine Einrichtung zum Ermitteln der lückenhaften Höhenlinie der Oberfläche, also beispielsweise eines Reifens 50. Im Gegensatz zur Anpassung einer analytischen Funktion, wie sie anhand von Fig. 5 dargestellt worden ist, werden nunmehr die Lücken lediglich aufgefüllt (55), um eine aufgefüllte Höhenlinie zu erhalten. Dieses Auffüllen findet unter Verwendung einer bekannten Interpolation statt. Für grobe Entscheidungen genügt bereits eine lineare Interpolation. Eine bessere Interpolation ergibt sich jedoch beispielsweise durch kubische Splines, derart, daß die aufgefüllte Höhenlinie einen klaren Verlauf hat.

Mittels einer Einrichtung 65 wird nunmehr die aufgefüllte Höhenlinie von der ursprünglichen Höhenlinie subtrahiert, derart, daß sich, wenn an Fig. 3 gedacht wird, die gestrichelte Linie 30 ergibt, die jedoch noch sowohl die reliefartigen Unebenheiten 22a, 22b als auch die Beule 21b und die Einschnürung 21a umfaßt. Durch Subtraktion der aufgefüllten Höhenlinie von der ursprünglichen Höhenlinie wurde daher der Seitenschlag, welcher das interessierende Merkmal bei der in Fig. 5 dargestellten Vorrichtung war, extrahiert.

Wenn anstatt der in Fig. 3 dargestellten umfangsmäßigen Höhenlinie der Reifen in radialer Form aufgenommen wird, so ergibt sich eine radiale Höhenlinie des Reifens, welche sowohl Beulen als auch Einschnürungen und Schriften aufweist. In diesem Fall dienen die Einrichtungen 50, 55 und 65 von Fig. 6 zum Extrahieren der Wölbung des Reifens von der ursprünglich aufgenommenen Höhenlinie. Das erfindungsgemäße Konzept kann daher statt der Bandpassfilterung eingesetzt werden, um eine Extraktion der Wölbung des Reifens gemäß der WO 00/25088 zu erreichen.

Wieder bezugnehmend auf Fig. 6 wird nunmehr aufgrund des Ergebnisses der in der Einrichtung 65 ausgeführten Subtraktion eine Bestimmung der Art und Höhe der Unebenheit unter verwendung eines Schwellwertes mittels einer Einrichtung 75 durchgeführt. Es sei darauf hingewiesen, daß nunmehr die Art der örtlich begrenzten Unebenheit, d. h. ob sie eine Aufschrift oder eine Beule ist, beispielsweise unter Verwendung eines einfachen Schwellwert-Verfahrens durchgeführt werden kann, Die Klassifikation der Beule bzw. Einschnürung, also ob die Beule oder Einschnürung so stark ist, daß eine Ausmusterung des Reifens zu erfolgen hat, kann einfach durch einen Höhenschwellwertvergleich durchgeführt werden. Abhängig davon wird die Einrichtung 80 eine Aussonderung eines Reifens veranlassen oder nicht.

Grob gesprochen unterscheiden sich die in den Fig. 5 und 6 dargestellten Vorrichtungen somit dahingehend, daß bei Fig. 5 die örtlich begrenzten Unebenheiten eliminiert worden sind, um Seitenschlag oder Höhenschlag eines Reifens zu bestimmen, während in Fig. 6 eben der Seiten- oder Höhenschlag bzw. eine allgemeine Wölbung der Oberfläche extrahiert worden ist, um die örtlich begrenzten Unebenheiten an sich klassifizieren zu können.

Gemäß einem bevorzugtem Ausführungsbeispiel der vorliegenden Erfindung wird nicht nur eine Spur verwendet, um den Reifen zu klassifizieren, sondern eine Mehrzahl von Spuren. Optional kann jede Meßspur die Mehrzahl von Spuren getrennt verarbeitet werden. Alternativ können jedoch auch mehrere Meßspuren gemeinsam verwendet und beispielsweise einer Mittelung unterzogen werden, um die Meßsicherheit entsprechend der Anzahl der gemittelten Spuren zu erhöhen. Den Seitenschlag bzw. den Höhenschlag erhält man somit aus der Amplitude der durch die Einrichtung 60 von Fig. 5 erhaltenen analytischen Fittfunktion entweder für jede Spur separat oder über den Mittelwert von benachbarten Spuren, um neben der Erhöhung der Sicherheit der Detektion auch die Höhenauflösung entsprechend der Anzahl der gemittelten Spuren zu verbessern.

Zur Ermittlung des Höhenschlages, also von radialen Höhenunterschieden auf der Lauffläche, wird auf ähnliche Art und Weise die lückenhafte Höhenlinie des Reifens verwendet. Im Gegensatz zu einer Aufschrift auf der Seitenfläche des Reifens wird nunmehr eine Maskierung von Stellen durchgeführt, bei denen das Profil des Reifens eine Vertiefung aufweist, so daß nur die eigentliche Lauffläche des Reifens zur Ermittlung des Höhenschlages herangezogen wird.

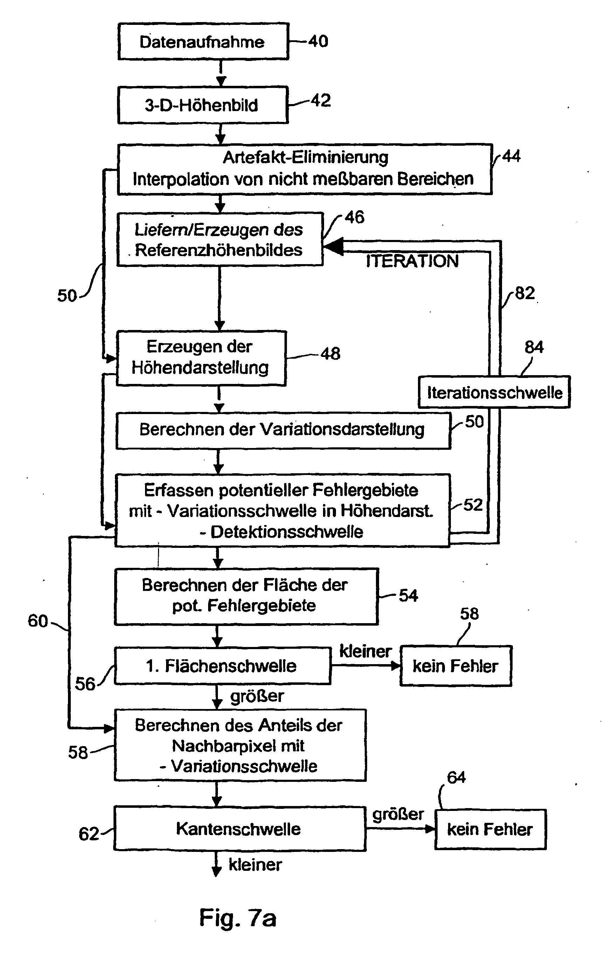

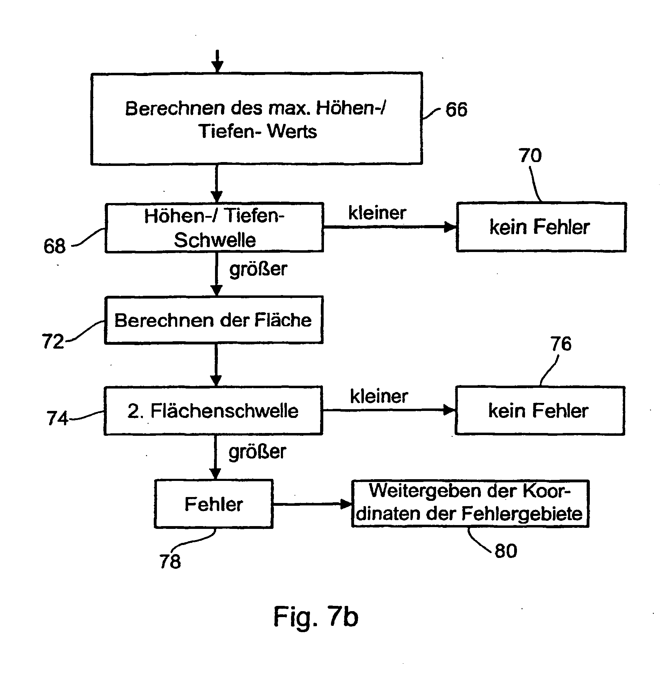

Im nachfolgenden wird auf die Fig. 7a und 7b Bezug genommen, um ein Verfahren zur Erkennung von Beulen/Einschnürungen oder allgemein gesagt von im wesentlichen kantenfreien Unebenheiten auf bzw. in einer Oberfläche eines Körpers, beispielsweise eines Reifens, darzustellen. Die Beulen stellen dabei Formanomalien dar.

In einem Schritt 40 wird eine Datenaufnahme des Reifens durchgeführt, wobei hierzu eine vorstehend dargelegte Vorrichtung verwendet werden kann. Anschließend wird in einem Schritt 42 ein dreidimensionales Höhenbild z. B. der Reifenseitenwand erzeugt. In einem Schritt 44 wird dann eine Eliminierung von nicht-meßbaren Bereichen durch Interpolation zwischen Nachbarbereichen sowie eine Verwerfung von extremen Höhenwerten zur Artefaktvermeidung durchgeführt. Extreme Höhenwerte entstehen beispielsweise durch Meßfehler oder aber durch punktartige Gummiaustriebe, die auf neuen Reifen vorhanden sind, und die selbstverständlich kein Problem hinsichtlich der Funktion oder Optik des Reifens darstellen.

Anschließend wird in einem Schritt 46 ein Referenzhöhenbild entweder extern von einer Datenbank geliefert oder anhand des untersuchten Körpers erzeugt. Das Referenzhöhenbild sollte ein möglichst strukturloses Referenzhöhenbild der Objektwölbung sein, was bevorzugterweise durch eindimensionale langreichweitige nicht-lineare Filterung über einen einstellbaren Objektbereich (Winkelbereich) in tangentialer Richtung, also in Umfangsrichtung, des Reifens bewirkt wird.

In einem Schritt 48 wird anschließend ein ebenes Reifenhöhenbild erzeugt, in dem nur noch Beulen (Einschnürungen) und Schrift, aber kein Seitenschlag und keine Wölbung mehr vorhanden sind. Dies wird durch Subtraktion der Referenzdarstellung von der dreidimensionalen Darstellung des Körpers erreicht. Hierzu wird, wie es durch einen Nebenpfeil 50 in Fig. 7a dargestellt ist, das Artefakt-gefilterte dreidimensionale Höhenbild verwendet. Aus der Höhendarstellung, die durch den Schritt 48 erzeugt wird, wird anschließend eine Variationsdarstellung berechnet (Schritt 50). Anschließend werden potentielle Fehlergebiete in einem Schritt 52 erfaßt. Dies geschieht vorzugsweise durch Bestimmung und Zusammenfassung von Gebieten in der Höhendarstellung, die durch den Schritt 48 erhalten wurde, wobei Gebiete zusammengefaßt werden, deren Höhen (dargestellt durch Graustufen) höher (oder tiefer) als die Detektionsschwelle sind, und deren Variation gleichzeitig unter der Variationsschwelle liegen.

Optional können diese Fehlergebiet noch mit einem nicht-linearen zweidimensionalen Filter bearbeitet werden, um Artefakte bzw. geringfügige Fehlergebiete bereits an dieser Stelle zu eliminieren. Als potentielle Fehlergebiete werden somit Gebiete erfaßt, die sich relativ langsam aus dem Reifen erheben bzw. sich in den Reifen hinein vertiefen, und die eine bestimmte Höhe haben. Um Größenordnungen zu geben, sei darauf hingewiesen, daß Reifen derart genau untersucht werden, daß bereits Beulen bzw. Einschnürungen erfaßt werden sollen, deren Höhe über der Oberflächen bzw. deren Tiefe unter der Oberfläche im Bereich von 0,3 mm liegt. Typischerweise werden Beulen oder Einschnürungen als kritisch empfunden, deren Höhe bzw. Tiefe 0,6 mm oder darüber beträgt. Durch die Detektionsschwelle, die im Schritt 52 verwendet wird, kann somit die Empfindlichkeit der Detektion eingestellt werden. Wird die Detektionsschwelle sehr hoch eingestellt, so werden nur relativ wenig potentiell qualitätsbeeinträchtigende Gebiete erfaßt, während, wenn die Detektionsschwelle sehr niedrig eingestellt wird, eine Vielzahl von potentiell qualitätsbeeinträchtigenden Fehlern erzeugt wird.

Es sei darauf hingewiesen, daß die Detektionsschwelle auch auf Null eingestellt werden kann, so daß das erfindungsgemäße Konzept lediglich zu einer Gradienten- bzw. Variationserfassung degradiert. Dann werden alle Bereiche der Oberfläche des Reifens erfaßt, die einen Gradienten unterhalb eines bestimmten Werts haben. Die potentiell qualitätsbeeinträchtigenden Gebiete sind dann alle Gebiete des Reifens, auf denen keine Schrift bzw. Strukturierung mit scharfen Kanten vorhanden ist. In dieser Betrachtung wird davon ausgegangen, daß Schriftbereiche nicht qualitätsbeeinträchtigend sind, während alle anderen Bereiche des Reifens mit einem gewissen Gradienten qualitätsbeeinträchtigend sein können. Es sei darauf hingewiesen, daß ebene Reifenflächen keinen Gradienten haben, so daß diese nicht als potentiell qualitätsbeeinträchtigend erfaßt werden.

An dieser Stelle sei darauf hingewiesen, daß im Schritt 52 von einer pixelweisen Verarbeitung, die in den vor dem Schritt 52 beschriebenen Schritten stattgefunden hat, in eine gebietsweise Bearbeitung übergegangen wird. Bei einem bevorzugten Ausführungsbeispiel der vorliegenden Erfindung findet sich datenverarbeitungsmäßig am Ausgang des Schritts 52 keine Pixeldarstellung mehr, sondern eine Liste von potentiell fehlerhaften zweidimnsionalen Gebieten, die jedoch durch ihre Eigenschaften und Koordinaten eindeutig der ursprünglichen dreidimensionalen Darstellung des Reifens zuordenbar sind.

Am Ende des Verfahrens, wenn einer der Bereiche, der in der Liste von potentiell qualitätsbeeinträchtigenden Bereichen aufgeführt ist, als qualitätsbeeinträchtigend klassifiziert wird, kann somit gesagt werden, an welcher Stelle des Reifens die Qualitätsbeeinträchtigung ist, damit eine Person, die eine manuelle Qualitätskontrolle durchführt, unmittelbar zu der problematischen Stelle an dem Reifen geführt wird.

Bei dem in Fig. 7a gezeigten Verfahren wird in einem Schritt 54 eine Flächenberechnung der durch den Schritt 52 erhaltenen Gebiete, welche potentielle Fehlergebiete sind, durchgeführt. In einem Schritt 56 werden die berechneten Flächen mit einer vorbestimmten ersten Flächenschwelle verglichen. Wird festgestellt, daß die Fläche eines potentiellen Fehlergebiets kleiner als die Flächenschwelle ist, so bedeutet dies, daß dieses Fehlergebiet aufgrund seiner kleinen Ausdehnung unkritisch ist, und daß bei diesem potentiellen Fehlergebiet somit kein Fehler vorliegt (58).

Wird jedoch festgestellt, daß die Fläche eines potentiellen Fehlergebiets größer als die Flächenschwelle ist, so wird dieses Fehlergebiet weiterhin in der Liste von potentiellen Fehlergebieten gehalten. Das potentielle Fehlergebiet, bei dem festgestellt worden ist, daß es unproblematisch ist, wird dagegen aus der Liste von potentiell qualitätsbeeinträchtigenden Gebieten eliminiert.

In einem Schritt 58 wird eine weitere Untersuchung der noch verbliebenen potentiellen Fehlergebiete durchgeführt. Insbesondere wird der prozentuale Anteil der Nachbarpixel der potentiellen Fehlergebiete, die entweder im Schritt 52 berechnet wurden, oder die nach dem Schritt 56 noch verblieben sind, berechnet, die eine hohe Variation, d. h. einen hohen Gradienten aufweisen. Hierzu wird die variationsdarstellung von Schritt 50 verwendet, wie es durch einen Pfeil 60 dargestellt ist. Für Gebiete, deren prozentualer Anteil der Nachbarpixel mit hoher Variation oberhalb einer sogenannten Kantenschwelle ist (Schritt 62), werden dennoch als Strukturierung erkannt und als nicht-fehlerhaft klassifiziert (64). Ist dagegen der prozentuale Anteil der Nachbarpixel des betreffenden Gebiets kleiner als die im Block 62 verwendete vorbestimmte Kantenschwelle, so kann davon ausgegangen werden, daß hier keine durch Kanten begrenzte Strukturierung vorliegt, und daß der betreffende Bereich nach wie vor potentiell qualitätsbeeinträchtigend ist.

Die Bereiche, die durch den Vergleich mit der Kantenschwelle im Block 62 aussortiert werden, sind beispielsweise solche Bereiche, die zwar einen scharf umgrenzten Rand haben, die jedoch innerhalb des Rands nicht vollständig flach sind, also eine Variation von Null haben, sondern zusätzlich innerhalb der scharfen Umgrenzung ebenfalls eine Vertiefung oder Erhöhung haben, die sanft ansteigt und wieder sanft abnimmt. Reifeneinstempelungen können eine derartige Struktur haben. Durch die Untersuchung der Nachbarpixel des Gebiets kann festgestellt werden, ob unmittelbar angrenzend eine hohe Variation war, so daß trotz der Tatsache, daß ein solches Gebiet bei der Untersuchung in der Einrichtung 52 als potentiell fehlerhaft eingestuft worden ist, dasselbe dennoch eine unkritische Soll-Strukturierung ist. Der Prozentsatz, also die Kantenschwelle, die zwischen 0 und 100% einstellbar wird, wird vorzugsweise in einem Bereich zwischen 80 und 100% liegen, wobei mit dieser Schwelle jedoch individuell auf den bestimmten Reifentyp eingegangen werden kann bzw. auf die Genauigkeit der optischen Erfassung.

Von den noch verbleibenden potentiell qualitätsbeeinträchtigenden Gebieten wird nunmehr in einem Schritt 66 der maximale Höhen- bzw. Tiefen-Wert berechnet. Darauf findet in einem Block 68 eine Vergleichsoperation der erhaltenen Werte mit einer Höhenschwelle oder einer Tiefenschwelle statt, wobei die Höhenschwelle und die Tiefenschwelle einen identischen Betrag oder unterschiedliche Beträge haben können, da der Fall auftreten kann, daß Beulen mit einer bestimmten Höhe kritischer sind als Einschnürungen mit derselben Höhe. Wird herausgefunden, daß die berechnete maximale Höhe/Tiefe eines Gebiets betragsmäßig größer als der Betrag der jeweiligen Schwelle ist, so werden diese entsprechenden Gebiete bei der weiteren Rechnung berücksichtigt. Wird jedoch festgestellt, daß die maximalen Höhen/Tiefen kleiner als die entsprechende Schwelle sind, so werden diese Bereiche als unterkritische klassifiziert. Sie stellen keine Fehlergebiete dar (Block 70), da sie zwar bisher einige Tests bestanden haben, jedoch ihre Höhe/Tiefe zu gering ist, als daß diese Unebenheit kritisch sein könnte für die Funktion des Reifens bzw. für die Funktion des Körpers, der durch die Oberflächenuntersuchung einer Qualitätsüberprüfung unterzogen wird.

In einem Schritt 72 wird dann eine Flächenberechnung der noch verbleibenden Gebiete durchgeführt, wobei Flächenberechnungen allgemein durch Aufsummieren der Pixel in einem Gebiet und dann durch Umrechnung der Vergrößerungs/Verkleinerungs-Faktoren der Optik durchgeführt werden.

Schließlich werden die potentiell qualitätsbeeinträchtigenden Gebiete, die nach dem Schritt 68 noch verblieben sind, also deren Fläche im Schritt 72 berechnet worden ist, mit einer zweiten Flächenschwelle verglichen, wobei, wenn deren Flächenwert kleiner als die zweite Flächenschwelle ist, dieselben als nicht problematisch eingestuft werden, also keinen Fehler darstellen (Block 76), während, wenn in dem Block 74 bestimmt wird, daß die Fläche eines Gebiets größer als die zweite Flächenschwelle ist, dieses Gebiet letztendlich als Fehlergebiet klassifiziert wird (Block 78). Wie es bereits erwähnt worden ist, können dann in einem Schritt 80 die Koordinaten und Ausdehnung des Fehlergebiets bzw., falls mehrere Gebiete problematisch sind, diese mehreren Fehlergebiete ausgegeben werden, um es einer manuellen Nachkontrolle zu ermöglichen, schnell die entsprechenden Stellen zu finden.

Das vorstehende Verfahren kann erfindungsgemäß dazu verwendet werden, um jegliche örtlich begrenzten Unebenheiten in einer zweidimensionalen Darstellung des Reifens zu detektieren und zu eliminieren, um eine lückenhafte Höhendarstellung des Reifens zu erhalten.

Hierzu kann eine Iteration 82 durchgeführt werden, indem nach dem Schritt 52 die Schritte 46, 48, 50, 52 iterativ wiederholt werden, wie es durch den Iterationspfeil 82 angedeutet ist. Hierzu werden im Schritt 46 zum Liefern/Erzeugen des Referenzhöhenbildes nur noch diejenigen Objektbereiche herangezogen, die nicht potentiell qualitätsbeeinträchtigend sind, und die darüber hinaus keine Schriftbereiche sind, also einen hohen Gradienten haben. Die verbleibenden Objektbereiche bilden die zweidimensionale lückenhafte Darstellung, die im nächsten Iterationsschritt interpoliert wird und dazu verwendet wird, um Beulen etc. noch sicherer vermessen zu können. In bestimmten Fällen dürfte jedoch die Information über die Gebiete, die potentiell qualitätsbeeinträchtigend sind, und die Kanten haben, welche alle im Schritt 52 erfaßt werden können, genügen, um die lückenhafte Darstellung zu ermitteln.

Die dann verbleibende lückenhafte dreidimensionale Darstellung beispielsweise des Reifens kann durch analytische (periodische oder aperiodische) Funktionen gefittet und ersetzt werden. Alternativ kann die gesamte Reifenform anhand der verbleibenden Objektgebiete analytisch gefittet werden. Alternativ kann auch eine Interpolation beispielsweise mittels kubischer Splines oder ähnlicher Verfahren eingesetzt werden.

Die Zahl der durchzuführenden Iterationen hängt von der gewünschten Meßgenauigkeit ab. Ein Abbruchkriterium kann beispielsweise derart definiert werden, daß sich die Koeffizienten oder die Differenz der absoluten Höhenwerte der gewölbten Reifenform aus nacheinanderfolgenden Iterationen weniger als eine bestimmte Schwelle unterscheiden, wie es durch einen mit "Iterationsschwelle" bezeichneten Block 84 in Fig. 7a schematisch dargestellt ist.

An dieser Stelle sei darauf hingewiesen, daß die Reihenfolge der einzelnen Schwellwertentscheidungen beliebig ist. Darüberhinaus würde prinzipiell auch eine einzige Flächenschwelle genügen. Wenn jedoch zwei Flächenschwellen verwendet werden (Block 56 und Block 74), so können auch Zwischenergebnisse über den Reifen erhalten werden, nämlich ob er Beulen bzw. Einschnürungen hat, und ob die Beulen unterkritisch sind, d. h. daß ihre Fläche zwischen der ersten und zweiten Flächenschwelle liegt. Selbstverständlich könnte die Flächenschwellenentscheidung beispielsweise vor der Kantenschwellenentscheidung oder aber vor der Höhenschwellenentscheidung (Block 68) stattfinden. Zur Minimierung des Rechenaufwands wird es jedoch bevorzugt, zunächst die Entscheidungen durchzuführen, mit denen eine möglichst große Anzahl der potentiell qualitätsbeeinträchtigenden Gebiete als nicht-kritisch klassifiziert werden, so daß die Liste der nach und nach zu untersuchenden potentiell qualitätsbeeinträchtigenden Gebiete möglichst schnell möglichst klein wird. Alternativ könnte auch die Reihenfolge der Schwellwertentscheidungen so gewählt werden, daß möglichst schnell ein fehlerhaftes Gebiet gefunden wird, was dazu führt, daß der Reifen ausgemustert wird. In diesem Fall ist es unerheblich, ob noch weitere fehlerhafte Gebiete vorhanden sind bzw. ob noch weitere potentiell fehlerhafte Gebiete vorhanden sind, da bereits ein fehlerhaftes Gebiet ausreicht, um den Reifen zu einem defekten Reifen zu machen.

## Patentansprüche

1. Verfahren zum Charakterisieren einer Oberfläche (20), die eine örtlich begrenzte Unebenheit (21a, 21b, 22a, 22b) aufweist, mit folgenden Schritten:
Erzeugen (10) einer Mehrzahl von nebeneinander liegenden Höhenlinien der Oberfläche, um eine zweidimensionale Höhendarstellung der Oberfläche zu erzeugen, wobei eine Höhenlinie der Oberfläche als Funktion einer Ortsvariablen (φ) erzeugt wird, und wobei die zweidimensionale Höhendarstellung eine Vielzahl von Bildpunkten aufweist, die jeweils eine Höhe haben;
Detektieren (12) der örtlich begrenzten Unebenheit (21a, 21b, 22a, 22b) in der zweidimensionalen Höhendarstellung, wobei im Schritt des Detektierens (12)
eine Variationsdarstellung aus der Höhendarstellung für die Bildpunkte der zweidimensionalen Höhendarstellung berechnet wird (50), wobei die Variationsdarstellung für die Bildpunkte der zweidimensionalen Höhendarstellung für einen Bildpunkt jeweils einen Wert aufweist, der eine Aussage über einen Höhenunterschied zwischen benachbarten Bildpunkten der zweidimensionalen Darstellung liefert, wobei der Wert für einen Bildpunkt ein Betrag des Gradientenvektors an dem Bildpunkt ist, oder eine Variation des Bildpunkts ist, die aus einer Summe der Differenzenquadrate der Höhen zwischen dem Bildpunkt und dem Bildpunkt benachbarten Bildpunkten berechnet wird,
unter Verwendung einer Variationsschwelle durch Kanten begrenzte örtliche Unebenheiten detektiert werden, und unter Verwendung der Variationsschwelle im wesentlichen kantenfreie örtlich begrenzte Unebenheiten detektiert werden (52); und
Eliminieren (14) der detektierten durch Kanten begrenzten Unebenheiten und der detektierten im wesentlichen kantenfreien Unebenheiten aus der Höhendarstellung, so dass sich eine lückenhafte Darstellung der Oberfläche ergibt, die die Oberfläche ohne die örtlich begrenzte Unebenheit charakterisiert.

2. Verfahren nach Anspruch 1, bei dem die örtliche begrenzte Unebenheit eine kantenartige Reliefstruktur (22a, 22b) ist, und bei dem der Schritt des Detektierens (12) folgenden Schritt aufweist:
Ermitteln einer ersten Kante und einer daran anschließenden zweiten Kante einer Höhenlinie unter Verwendung eines Gradienten der Höhenlinie als Funktion der Ortsvariable, wobei der Bereich zwischen der ersten und der zweiten Kante die detektierte örtlich begrenzte Unebenheit ist.

3. Verfahren nach Anspruch 2, bei dem die erste und die zweite Kante dadurch ermittelt werden, dass der Betrag des Gradienten der Höhenlinie größer als ein vorbestimmter Schwellenwert ist.

4. Verfahren nach einem der vorhergehenden Ansprüche, bei dem die örtlich begrenzte Unebenheit eine Beule (21b) oder eine Vertiefung (21a) auf bzw. in der Oberfläche ist, und bei dem der Schritt des Detektierens (12) folgende Schritte aufweist:
Bestimmen der Ausdehnung der Beule bzw. Einschnürung entlang der Ortsvariablen;
Vergleichen der bestimmen Ausdehnung entlang der Ortsvariablen mit einem vorbestimmten Schwellenwert;
falls die bestimmte Ausdehnung größer als der vorbestimmte Schwellenwert ist, Bestimmen der Beule bzw. Vertiefung als detektierte örtlich begrenzte Unebenheit.

5. Verfahren nach einem der Ansprüche 2 bis 4, bei dem die Oberfläche eine Seitenflanke (20) eines Fahrzeugreifens ist, und die Höhenlinie eine Umfangsspur der Seitenfläche ist, wobei die Ortsvariable ein Drehwinkel ist.

6. Verfahren zum Ermitteln einer Formanomalie einer Oberfläche (20), die eine örtlich begrenzte Unebenheit aufweist, die nicht als Formanomalie ermittelt werden soll, mit folgenden Schritten:
Charakterisieren (50) der Oberfläche gemäß Patentanspruch 1, um eine lückenhafte Darstellung der Oberfläche zu erhalten, die lediglich Informationen bezüglich der Formanomalie und keine Informationen bezüglich der lokal begrenzten Unebenheit aufweist;
Anpassen (62) einer analytischen Funktion an die lückenhafte Oberfläche;
Vergleichen (70) eines Maximums der analytischen Funktion mit einem vorbestimmten Schwellenwert;
Ermitteln (80) einer Formanomalie, wenn das Maximum den Schwellenwert überschreitet.

7. Verfahren nach Anspruch 6, bei dem die Oberfläche torusförmig ist und eine Höhenlinie eine Spur in tangentialer Richtung der torusförmigen Oberfläche ist;
bei dem die analytische Funktion eine harmonische Funktion ist, die zumindest eine Sinusfunktion mit dem Umfang der lückenhaften Höhenlinie als Orts-Periodenlänge aufweist, wobei die Amplitude der harmonischen Funktion gleich einer Differenz zwischen einem lokalen Maximum und einem Mittelwert der harmonischen Funktion ist.

8. Verfahren nach Anspruch 6 oder 7, bei dem die harmonische Funktion eine Summe von Sinusfunktionen aufweist, deren Frequenzen Vielfache der Frequenz der niederfrequentesten Sinusfunktion sind, wobei die Anzahl der Sinusfunktionen größer als Null und kleiner als ein vorbestimmter maximaler Wert ist.

9. Verfahren nach einem der Ansprüche 6 bis 8, bei dem die Oberfläche die Seitenfläche des Fahrzeugreifens ist, und die Formanomalie ein Seitenschlag des Reifens ist.

10. Verfahren in einem der Ansprüche 6 bis 8, bei dem die Oberfläche die Lauffläche eines Fahrzeugreifens ist, und die Formanomalie ein Höhenschlag des Fahrzeugreifens ist.

11. Verfahren zum Charakterisieren einer örtlich begrenzten Unebenheit (21a, 21b, 22a, 22b) auf einer Oberfläche (20), mit folgenden Schritten:
Charakterisieren der Oberfläche nach Patentanspruch 1, um eine lückenhafte Darstellung der Oberfläche zu erhalten, die lediglich Informationen bezüglich der Formanomalie und keine Informationen bezüglich der lokal begrenzten Unebenheit aufweist;
Auffüllen (55) der lückenhaften Darstellung unter Verwendung der Werte der lückenhaften Darstellung, um eine aufgefüllte Darstellung zu erhalten;
Subtrahieren (65) der aufgefüllten Darstellung von der ursprünglichen Darstellung, um eine Unebenheitendarstellung zu erhalten, die lediglich Informationen hinsichtlich der örtlich begrenzten Unebenheit umfasst;
Klassifizieren (75) der Unebenheit aufgrund ihrer Ausdehnung, Höhen und/oder geometrischen Form.

12. Verfahren nach Anspruch 11, bei dem im Schritt des Auffüllens (55) eine analytische Funktion an die lückenhafte Höhenlinie angepasst wird.

13. Verfahren nach Anspruch 11, bei dem im Schritt des Auffüllens (55) eine Interpolation erster und/oder höherer Ordnung durchgeführt wird.

14. Vorrichtung zum Charakterisieren einer Oberfläche (20), die eine örtlich begrenzte Unebenheit (21a, 21b, 22a, 22b) aufweist, mit folgenden Merkmalen:
einer Einrichtung zum Erzeugen (10) einer Mehrzahl von nebeneinanderliegenden Höhenlinien der Oberfläche, um eine zweidimensionale Höhendarstellung der Oberfläche zu erzeugen, wobei eine Höhenlinie der Oberfläche als Funktion einer Ortsvariablen (φ) erzeugt wird, und wobei die zweidimensionale Höhendarstellung eine Vielzahl von Bildelementen aufweist, die jeweils eine Höhe haben;
einer Einrichtung zum Detektieren (12) der örtlich begrenzten Unebenheit (21a, 21b, 22a, 22b) in der zweidimensionalen Höhendarstellung, wobei die Einrichtung zum Detektieren im Schritt des Detektierens (12)
eine Variationsdarstellung aus der Höhendarstellung für die Bildpunkte der zweidimensionalen Höhendarstellung berechnet (50) wobei die Variationsdarstellung für die Bildpunkte der zweidimensionalen Höhendarstellung für einen Bildpunkt jeweils einen Wert aufweist, der eine Aussage über einen Höhenunterschied zwischen benachbarten Bildpunkten der zweidimensionalen Darstellung liefert(50), wobei der Wert für einen Bildpunkt ein Betrag des Gradientenvektors an dem Bildpunkt ist, oder eine Variation des Bildpunkts ist, die aus einer Summe der Differenzenquadrate der Höhen zwischen dem Bildpunkt und dem Bildpunkt benachbarten Bildpunkten berechnet wird,
unter Verwendung einer Variationsschwelle durch Kanten begrenzte örtliche Unebenheiten detektiert, und unter Verwendung der Variationsschwelle im wesentlichen kantenfreie örtlich begrenzte Unebenheiten detektiert (52); und
einer Einrichtung zum Eliminieren (14) der detektierten durch Kanten begrenzten Unebenheiten und der detektierten im wesentlichen kantenfreien Unebenheiten aus der Höhendarstellung, so dass sich eine lückenhafte Darstellung der Oberfläche ergibt, die die Oberfläche ohne die örtlich begrenzte Unebenheit charakterisiert.

15. Vorrichtung zum Ermitteln einer Formanomalie einer Oberfläche, die eine örtlich begrenzte Unebenheit aufweist, die nicht als Formanomalie ermittelt werden soll, mit folgenden Merkmalen:
einer Einrichtung zum Charakterisieren (50), der Oberfläche gemäß Patentanspruch 1, um eine lückenhafte Darstellung der Oberfläche zu erhalten, die lediglich Informationen bezüglich der Formanomalie und keine Informationen bezüglich der lokal begrenzten Unebenheit aufweist;
einer Einrichtung zum Anpassen (62) einer analytischen Funktion an die lückenhafte Oberfläche;
einer Einrichtung zum Vergleichen (70) eines Maximums der analytischen Funktion mit einem vorbestimmten Schwellenwert; und
einer Einrichtung zum Ermitteln (80) einer Formanomalie, wenn das Maximum den Schwellenwert überschreitet.

16. Vorrichtung zum Charakterisieren einer örtlich begrenzten Unebenheit (21a, 21b, 22a, 22b) auf einer Oberfläche (20), mit folgenden Merkmalen:
einer Einrichtung zum Charakterisieren der Oberfläche nach Patentanspruch 1, um eine lückenhafte Darstellung der Oberfläche zu erhalten, die lediglich Informationen bezüglich der Formanomalie und keine Informationen bezüglich der lokal begrenzten Unebenheit aufweist;
einer Einrichtung zum Auffüllen (55) der lückenhaften Darstellung unter Verwendung der Werte der lückenhaften Darstellung, um eine aufgefüllte Darstellung zu erhalten;
einer Einrichtung zum Subtrahieren (65) der aufgefüllten Darstellung von der ursprünglichen Darstellung, um eine Unebenheitendarstellung zu erhalten, die lediglich Informationen hinsichtlich der örtlich begrenzten Unebenheit umfasst;
einer Einrichtung zum Klassifizieren (75) der Unebenheit aufgrund ihrer Ausdehnung, Höhen und/oder geometrischen Form.

17. Verfahren zum Ermitteln einer Formanomalie einer Oberfläche (20), die eine örtlich begrenzte Unebenheit aufweist, die nicht als Formanomalie ermittelt werden soll, mit folgenden Schritten:
Charakterisieren (50) der Oberfläche, um eine lückenhafte Darstellung der Oberfläche zu erhalten, die lediglich Informationen bezüglich der Formanomalie und keine Informationen bezüglich der lokal begrenzten Unebenheit aufweist, wobei das Charakterisieren (50) folgende Schritte aufweist:
Erzeugen (10) einer Mehrzahl von nebeneinander liegenden Höhenlinien der Oberfläche, um eine zweidimensionale Höhendarstellung der Oberfläche zu erzeugen, wobei eine Höhenlinie der Oberfläche als Funktion einer Ortsvariablen (φ) erzeugt wird;
Detektieren (12) der örtlich begrenzten Unebenheit (21a, 21b, 22a, 22b) in der zweidimensionalen Höhendarstellung, wobei im Schritt des Detektierens (12)
eine Variationsdarstellung aus der Höhendarstellung erzeugt wird (50),
unter Verwendung einer Variationsschwelle durch Kanten begrenzte örtliche Unebenheiten detektiert werden, und
unter Verwendung der Variationsschwelle im wesentlichen kantenfreie örtlich begrenzte Unebenheiten detektiert werden (52); und
Eliminieren (14) der detektierten durch Kanten begrenzten Unebenheiten und der detektierten im wesentlichen kantenfreien Unebenheiten aus der Höhendarstellung, so dass sich eine lückenhafte Darstellung der Oberfläche ergibt, die die Oberfläche ohne die örtlich begrenzte Unebenheit charakterisiert;
Anpassen (62) einer analytischen Funktion an die lückenhafte Oberfläche;
Vergleichen (70) eines Maximums der analytischen Funktion mit einem vorbestimmten Schwellenwert;
Ermitteln (80) einer Formanomalie, wenn das Maximum den Schwellenwert überschreitet.

18. Verfahren zum Charakterisieren einer örtlich begrenzten Unebenheit (21a, 21b, 22a, 22b) auf einer Oberfläche (20), mit folgenden Schritten:
Charakterisieren der Oberfläche, um eine lückenhafte Darstellung der Oberfläche zu erhalten, die lediglich Informationen bezüglich der Formanomalie und keine Informationen bezüglich der lokal begrenzten Unebenheit aufweist, wobei das Charakterisieren (50) folgende Schritte aufweist:
Erzeugen (10) einer Mehrzahl von nebeneinander liegenden Höhenlinien der Oberfläche, um eine zweidimensionale Höhendarstellung der Oberfläche zu erzeugen, wobei eine Höhenlinie der Oberfläche als Funktion einer Ortsvariablen (φ) erzeugt wird;
Detektieren (12) der örtlich begrenzten Unebenheit (21a, 21b, 22a, 22b) in der zweidimensionalen Höhendarstellung, wobei im Schritt des Detektierens (12)
eine Variationsdarstellung aus der Höhendarstellung erzeugt wird (50),
unter Verwendung einer Variationsschwelle durch Kanten begrenzte örtliche Unebenheiten detektiert werden, und
unter Verwendung der Variationsschwelle im wesentlichen kantenfreie örtlich begrenzte Unebenheiten detektiert werden (52); und
Eliminieren (14) der detektierten durch Kanten begrenzten Unebenheiten und der detektierten im wesentlichen kantenfreien Unebenheiten aus der Höhendarstellung, so dass sich eine lückenhafte Darstellung der Oberfläche ergibt, die die Oberfläche ohne die örtlich begrenzte Unebenheit charakterisiert;
Auffüllen (55) der lückenhaften Darstellung unter Verwendung der Werte der lückenhaften Darstellung, um eine aufgefüllte Darstellung zu erhalten;
Subtrahieren (65) der aufgefüllten Darstellung von der ursprünglichen Darstellung, um eine Unebenheitendarstellung zu erhalten, die lediglich Informationen hinsichtlich der örtlich begrenzten Unebenheit umfasst; und
Klassifizieren (75) der Unebenheit aufgrund ihrer Ausdehnung, Höhen und/oder geometrischen Form.

19. Vorrichtung zum Ermitteln einer Formanomalie einer Oberfläche, die eine örtlich begrenzte Unebenheit aufweist, die nicht als Formanomalie ermittelt werden soll, mit folgenden Merkmalen:
einer Einrichtung zum Charakterisieren (50) der Oberfläche, um eine lückenhafte Darstellung der Oberfläche zu erhalten, die lediglich Informationen bezüglich der Formanomalie und keine Informationen bezüglich der lokal begrenzten Unebenheit aufweist, wobei das Charakterisieren (50) folgende Schritte aufweist:
Erzeugen (10) einer Mehrzahl von nebeneinander liegenden Höhenlinien der Oberfläche, um eine zweidimensionale Höhendarstellung der Oberfläche zu erzeugen, wobei eine Höhenlinie der Oberfläche als Funktion einer Ortsvariablen (φ) erzeugt wird;
Detektieren (12) der örtlich begrenzten Unebenheit (21a, 21b, 22a, 22b) in der zweidimensionalen Höhendarstellung, wobei im Schritt des Detektierens (12)
eine Variationsdarstellung aus der Höhendarstellung erzeugt wird (50),
unter Verwendung einer Variationsschwelle durch Kanten begrenzte örtliche Unebenheiten detektiert werden, und
unter Verwendung der Variationsschwelle im wesentlichen kantenfreie örtlich begrenzte Unebenheiten detektiert werden (52); und
Eliminieren (14) der detektierten durch Kanten begrenzten Unebenheiten und der detektierten im wesentlichen kantenfreien Unebenheiten aus der Höhendarstellung, so dass sich eine lückenhafte Darstellung der Oberfläche ergibt, die die Oberfläche ohne die örtlich begrenzte Unebenheit charakterisiert;
einer Einrichtung zum Anpassen (62) einer analytischen Funktion an die lückenhafte Oberfläche;
einer Einrichtung zum Vergleichen (70) eines Maximums der analytischen Funktion mit einem vorbestimmten Schwellenwert; und
einer Einrichtung zum Ermitteln (80) einer Formanomalie, wenn das Maximum den Schwellenwert überschreitet.

20. Vorrichtung zum Charakterisieren einer örtlich begrenzten Unebenheit (21a, 21b, 22a, 22b) auf einer Oberfläche (20), mit folgenden Merkmalen:
einer Einrichtung zum Charakterisieren der Oberfläche, um eine lückenhafte Darstellung der Oberfläche zu erhalten, die lediglich Informationen bezüglich der Formanomalie und keine Informationen bezüglich der lokal begrenzten Unebenheit aufweist, wobei das Charakterisieren (50) folgende Schritte aufweist:
Erzeugen (10) einer Mehrzahl von nebeneinander liegenden Höhenlinien der Oberfläche, um eine zweidimensionale Höhendarstellung der Oberfläche zu erzeugen, wobei eine Höhenlinie der Oberfläche als Funktion einer Ortsvariablen (φ) erzeugt wird;
Detektieren (12) der örtlich begrenzten Unebenheit (21a, 21b, 22a, 22b) in der zweidimensionalen Höhendarstellung, wobei im Schritt des Detektierens (12)
eine Variationsdarstellung aus der Höhendarstellung erzeugt wird (50),
unter Verwendung einer Variationsschwelle durch Kanten begrenzte örtliche Unebenheiten detektiert werden, und
unter Verwendung der Variationsschwelle im wesentlichen kantenfreie örtlich begrenzte Unebenheiten detektiert werden (52); und
Eliminieren (14) der detektierten durch Kanten begrenzten Unebenheiten und der detektierten im wesentlichen kantenfreien Unebenheiten aus der Höhendarstellung, so dass sich eine lückenhafte Darstellung der Oberfläche ergibt, die die Oberfläche ohne die örtlich begrenzte Unebenheit charakterisiert;
einer Einrichtung zum Auffüllen (55) der lückenhaften Darstellung unter Verwendung der Werte der lückenhaften Darstellung, um eine aufgefüllte Darstellung zu erhalten;
einer Einrichtung zum Subtrahieren (65) der aufgefüllten Darstellung von der ursprünglichen Darstellung, um eine Unebenheitendarstellung zu erhalten, die lediglich Informationen hinsichtlich der örtlich begrenzten Unebenheit umfasst; und
einer Einrichtung zum Klassifizieren (75) der Unebenheit aufgrund ihrer Ausdehnung, Höhen und/oder geometrischen Form.

## Claims

1. Method for characterizing a surface (20) having a localized unevenness (21a, 21b, 22a, 22b), comprising:
creating (10) a plurality of adjacent contour lines of the surface to create a two-dimensional height representation of the surface, a contour line of the surface being created as a function of a location variable (ϕ), and the two-dimensional height representation comprising a multitude of image points, each of which comprises a height;
detecting (12) the localized unevenness (21a, 21b, 22a, 22b) in the two-dimensional height representation, wherein the step of detecting (12) comprises
calculating a variation representation from the height representation for the image points of the two-dimensional height representation (50), the variation representation for the image points of the two-dimensional height representation comprising a value, respectively, that indicates a difference in height between adjacent image points of the two-dimensional representation, the value for an image point being an amount of the gradient vector at the image point, or being a variation of the image point that is calculated from a sum of the difference squares of the heights between the image point and image points adjacent to the image point,
detecting localized points of unevenness delimited by edges using a variation threshold, and
detecting essentially edge-free localized points of unevenness using the variation threshold (52); and
eliminating (14) the detected points of unevenness delimited by edges and the detected essentially edge-free points of unevenness from the height representation, so that an incomplete representation of the surface results which characterizes the surface without the localized unevenness.

2. Method as claimed in claim 1, wherein the localized unevenness is an edge-like relief structure (22a, 22b), and wherein the step of detecting (12) comprises:
determining a first edge and an adjacent second edge of a contour line using a gradient of the contour line as a function of the location variable, the region between the first and second edges being the detected localized unevenness.

3. Method as claimed in claim 2, wherein the first and second edges are determined by the fact that the amount of the gradient of the contour line is higher than a predetermined threshold value

4. Method as claimed in any one of the previous claims, wherein the localized unevenness is a bulge (21b) or a depression (21a) on and/or in the surface, and wherein the step of detecting (12) comprises:
determining the extension of the bulge and/or constriction along the location variable;
comparing the determined extension along the location variable with a predetermined threshold value;
if the determined extension is larger than the predetermined threshold value, determining the bulge and/or depression as a detected localized unevenness.

5. Method as claimed in any one of claims 2 to 4, wherein the surface is a side flank (20) of a vehicle tire, and the contour line is a circumferential track of the side face, the location variable being an angle of rotation.

6. Method for determining a shape anomaly of a surface (20) having a localized unevenness which is not to be determined as a shape anomaly, comprising:
characterizing (50) the surface as claimed in claim 1 to obtain an incomplete representation of the surface which comprises merely information relating to the shape anomaly, but no information relating to the localized unevenness;
adjusting (62) an analytical function to the incomplete surface;
comparing (70) a maximum of the analytical function to a predetermined threshold value;
determining (80) a shape anomaly if the maximum exceeds the threshold value.

7. Method as claimed in claim 6, wherein the surface is torus-shaped, and a contour line is a track in the tangential direction of the torus-shaped surface;
wherein the analytical function is a harmonic function comprising at least one sinusoidal function with the circumference of the incomplete contour line as a location period interval, the amplitude of the harmonic function equaling a difference between a local maximum and a mean value of the harmonic function.

8. Method as claimed in claim 6 or 7, wherein the harmonic function comprises a sum of sinusoidal functions whose frequencies are multiples of the frequency of the lowest-frequency sinusoidal function, the number of the sinusoidal functions being larger than zero and smaller than a predetermined maximum value.

9. Method as claimed in any one of claims 6 to 8, wherein the surface is the side face of the vehicle tire, and the shape anomaly is a side wobble of the tire.

10. Method as claimed in any one of claims 6 to 8, wherein the surface is the running tread of a vehicle tire, and the shape anomaly is a height wobble of the vehicle tire.

11. Method for characterizing a localized unevenness (21a, 21b, 22a, 22b) on a surface (20), comprising:
characterizing the surface as claimed in claim 1 to obtain an incomplete representation of the surface comprising merely information relating to the shape anomaly, but no information relating to the localized unevenness;
filling up (52) the incomplete representation using the values of the incomplete representation to obtain a filled-up representation;
subtracting (65) the filled-up representation from the original representation to obtain a representation of points of unevenness including merely information relating to the localized unevenness;
classifying (75) the unevenness on the basis of its extension, height and/or geometrical shape.

12. Method as claimed in claim 11, wherein the step of filling up (55) includes adjusting an analytical function to the incomplete contour line.

13. Method as claimed in claim 11, wherein the step of filling up (55) includes performing an interpolation of a first and/or higher order.

14. Apparatus for characterizing a surface (20) having a localized unevenness (21a, 21b, 22a, 22b), comprising:
means for creating (10) a plurality of adjacent contour lines of the surface to create a two-dimensional height representation of the surface, a contour line of the surface being created as a function of a location variable (ϕ), and the two-dimensional height representation comprising a multitude of image points, each of which comprises a height;
means for detecting (12) the localized unevenness (21a, 21b, 22a, 22b) in the two-dimensional height representation, wherein in the step of detecting (12), the means for detecting
provides a variation representation from the height representation for the image points of the two-dimensional height representation (50), the variation representation for the image points of the two-dimensional height representation comprising a value, respectively, that indicates a difference in height between adjacent image points of the two-dimensional representation, the value for an image point being an amount of the gradient vector at the image point, or being a variation of the image point that is calculated from a sum of the difference squares of the heights between the image point and image points adjacent to the image point,
detects localized points of unevenness delimited by edges using a variation threshold, and
detects essentially edge-free localized points of unevenness using the variation threshold (52); and
means for eliminating (14) the detected points of unevenness delimited by edges and the detected essentially edge-free points of unevenness from the height representation, so that an incomplete representation of the surface results which characterizes the surface without the localized unevenness.

15. Apparatus for determining a shape anomaly of a surface having a localized unevenness which is not to be determined as a shape anomaly, comprising:
means for characterizing (50) the surface as claimed in claim 14 to obtain an incomplete representation of the surface which comprises merely information relating to the shape anomaly, but no information relating to the localized unevenness;
means for adjusting (62) an analytical function to the incomplete surface;
means for comparing (70) a maximum of the analytical function to a predetermined threshold value;
means for determining (80) a shape anomaly if the maximum exceeds the threshold value.

16. Apparatus for characterizing a localized unevenness (21a, 21b, 22a, 22b) on a surface (20), comprising:
means for characterizing the surface as claimed in claim 14 to obtain an incomplete representation of the surface comprising merely information relating to the shape anomaly, but no information relating to the localized unevenness;
means for filling up (52) the incomplete representation using the values of the incomplete representation to obtain a filled-up representation;
means for subtracting (65) the filled-up representation from the original representation to obtain a representation of points of unevenness including merely information relating to the localized unevenness;
means for classifying (75) the unevenness on the basis of its extension, height and/or geometrical shape.

17. Method for determining a shape anomaly of a surface (20) having a localized unevenness which is not to be determined as a shape anomaly, comprising:
characterizing (50) the surface to obtain an incomplete representation of the surface which comprises merely information relating to the shape anomaly, but no information relating to the localized unevenness, said characterizing (50) comprising:
creating (10) a plurality of adjacent contour lines of the surface to create a two-dimensional height representation of the surface, a contour line of the surface being created as a function of a location variable (ϕ);
detecting (12) the localized unevenness (21a, 21b, 22a, 22b) in the two-dimensional height representation, wherein the step of detecting (12) comprises
creating a variation representation from the height representation (50),
detecting localized points of unevenness delimited by edges using a variation threshold, and
detecting essentially edge-free localized points of unevenness using the variation threshold (52); and
eliminating (14) the detected points of unevenness delimited by edges and the detected essentially edge-free points of unevenness from the height representation, so that an incomplete representation of the surface results which characterizes the surface without the localized unevenness;
adjusting (62) an analytical function to the incomplete surface;
comparing (70) a maximum of the analytical function to a predetermined threshold value;
determining (80) a shape anomaly if the maximum exceeds the threshold value.

18. Method for characterizing a localized unevenness (21a, 21b, 22a, 22b) on a surface (20), comprising:
characterizing the surface to obtain an incomplete representation of the surface comprising merely information relating to the shape anomaly, but no information relating to the localized unevenness, said characterizing (50) comprising:
creating (10) a plurality of adjacent contour lines of the surface to create a two-dimensional height representation of the surface, a contour line of the surface being created as a function of a location variable (ϕ);
detecting (12) the localized unevenness (21a, 21b, 22a, 22b) in the two-dimensional height representation, wherein the step of detecting (12) comprises
creating a variation representation from the height representation (50),
detecting localized points of unevenness delimited by edges using a variation threshold, and
detecting essentially edge-free localized points of unevenness using the variation threshold (52); and
eliminating (14) the detected points of unevenness delimited by edges and the detected essentially edge-free points of unevenness from the height representation, so that an incomplete representation of the surface results which characterizes the surface without the localized unevenness;
filling up (52) the incomplete representation using the values of the incomplete representation to obtain a filled-up representation;
subtracting (65) the filled-up representation from the original representation to obtain a representation of points of unevenness including merely information relating to the localized unevenness; and
classifying (75) the unevenness on the basis of its extension, height and/or geometrical shape.

19. Apparatus for determining a shape anomaly of a surface having a localized unevenness which is not to be determined as a shape anomaly, comprising:
means for characterizing (50) the surface to obtain an incomplete representation of the surface which comprises merely information relating to the shape anomaly, but no information relating to the localized unevenness, said characterizing (50) comprising:
creating (10) a plurality of adjacent contour lines of the surface to create a two-dimensional height representation of the surface, a contour line of the surface being created as a function of a location variable (φ);
detecting (12) the localized unevenness (21a, 21b, 22a, 22b) in the two-dimensional height representation, wherein the step of detecting (12) comprises
creating a variation representation from the height representation (50),
detecting localized points of unevenness delimited by edges using a variation threshold, and
detecting essentially edge-free localized points of unevenness using the variation threshold (52); and
eliminating (14) the detected points of unevenness delimited by edges and the detected essentially edge-free points of unevenness from the height representation, so that an incomplete representation of the surface results which characterizes the surface without the localized unevenness;
means for adjusting (62) an analytical function to the incomplete surface;
means for comparing (70) a maximum of the analytical function to a predetermined threshold value;
means for determining (80) a shape anomaly if the maximum exceeds the threshold value.

20. Apparatus for characterizing a localized unevenness (21a, 21b, 22a, 22b) on a surface (20), comprising:
means for characterizing the surface to obtain an incomplete representation of the surface comprising merely information relating to the shape anomaly, but no information relating to the localized unevenness, said characterizing (50) comprising:
creating (10) a plurality of adjacent contour lines of the surface to create a two-dimensional height representation of the surface, a contour line of the surface being created as a function of a location variable (φ);
detecting (12) the localized unevenness (21a, 21b, 22a, 22b) in the two-dimensional height representation, wherein the step of detecting (12) comprises
creating a variation representation from the height representation (50),
detecting localized points of unevenness delimited by edges using a variation threshold, and
detecting essentially edge-free localized points of unevenness using the variation threshold (52); and
eliminating (14) the detected points of unevenness delimited by edges and the detected essentially edge-free points of unevenness from the height representation, so that an incomplete representation of the surface results which characterizes the surface without the localized unevenness;
means for filling up (52) the incomplete representation using the values of the incomplete representation to obtain a filled-up representation;
means for subtracting (65) the filled-up representation from the original representation to obtain a representation of points of unevenness including merely information relating to the localized unevenness; and
means for classifying (75) the unevenness on the basis of its extension, height and/or geometrical shape.

## Revendications

1. Procédé pour caractériser une surface (20) présentant une irrégularité localement délimitée (21a, 21b, 22a, 22b), aux étapes suivantes consistant à:
générer (10) une pluralité de lignes de hauteur adjacentes de la surface, pour générer une représentation de hauteur bidimensionnelle de la surface, une ligne de hauteur de la surface étant générée en fonction d'une variable d'emplacement (ϕ), et la représentation de hauteur bidimensionnelle comprenant une multitude de points d'image comprenant, chacun, une hauteur;
détecter (12) l'irrégularité localement délimitée (21a, 21b, 22a, 22b) dans la représentation de hauteur bidimensionnelle, où l'étape de détection (12) comprend les étapes suivantes consistant à:
calculer une représentation de variation à partir de la représentation de hauteur pour les points d'image de la représentation de hauteur bidimensionnelle (50), la représentation de variation pour les points d'image de la représentation de hauteur bidimensionnelle comprenant respectivement une valeur qui indique une différence de hauteur entre points d'image adjacents de la représentation bidimensionnelle, la valeur pour un point d'image étant une valeur du vecteur de gradient au point d'image ou étant une variation du point d'image qui est calculée à partir d'une somme des carrés de différence des hauteurs entre le point d'image et les points d'image adjacents au point d'image,
détecter, à l'aide d'un seuil de variation, des irrégularités localement délimitées par des bords, et
détecter, à l'aide du seuil de variation, des irrégularités localement délimitées sensiblement sans bords (52); et
éliminer (14) de la représentation de hauteur les irrégularités délimitées par des bords détectées et les irrégularités sensiblement sans bords détectées, de sorte qu'il soit obtenu une représentation incomplète de la surface qui caractérise la surface sans irrégularité localement délimitée.

2. Procédé selon la revendication 1, dans lequel l'irrégularité localement délimitée est une structure en relief en forme de bord (22a, 22b), et dans lequel l'étape de détection (12) comprend l'étape suivante consistant à:
déterminer un premier bord et un deuxième bord adjacent d'une ligne de hauteur à l'aide d'un gradient de la ligne de hauteur en fonction de la variable d'emplacement, la zone entre le premier et le deuxième bord étant l'irrégularité localement délimitée détectée.

3. Procédé selon la revendication 2, dans lequel le premier et le deuxième bord sont déterminés par le fait que la valeur du gradient de la ligne de hauteur est supérieure à une valeur de seuil prédéterminée.

4. Procédé selon l'une des revendications précédentes, dans lequel l'irrégularité localement délimitée est une bosse (21b) ou un creux (21a) sur et/ou dans la surface, et dans lequel l'étape de détection (12) comprend les étapes suivantes consistant à:
déterminer l'extension de la bosse et/ou constriction le long de la variable d'emplacement;
comparer l'extension déterminée le long de la variable d'emplacement avec une valeur de seuil prédéterminée;
si l'extension déterminée est supérieure à la valeur de seuil prédéterminée, déterminer la bosse et/ou le creux comme irrégularité localement délimitée détectée.

5. Procédé selon l'une des revendications 2 à 4, dans lequel la surface est un flanc latéral (20) d'un pneu de véhicule, et la ligne de hauteur est une trace circonférentielle du flanc latéral, la variable d'emplacement étant un angle de rotation.

6. Procédé pour déterminer une anomalie de forme d'une surface (20) présentant une irrégularité localement délimitée qui ne doit pas être déterminée comme anomalie de forme, aux étapes suivantes consistant à:
caractériser (50) la surface selon la revendication 1, pour obtenir une représentation incomplète de la surface qui ne présente que des informations relatives à l'anomalie de forme et pas d'informations relatives à l'irrégularité localement délimitée;
adapter (62) une fonction analytique à la surface incomplète;
comparer (70) un maximum de la fonction analytique avec une valeur de seuil prédeterminée;
déterminer (80) une anomalie de forme, lorsque le maximum excède la valeur de seuil.

7. Procédé selon la revendication 6, dans lequel la surface est torique et une ligne de hauteur est une trace dans le sens tangentiel de la surface torique;
dans lequel la fonction analytique est une fonction harmonique présentant au moins une fonction sinusoïdale avec l'étendue de la ligne de hauteur incomplète comme longueur de période locale, l'amplitude de la fonction harmonique étant égale à une différence entre un maximum local et une valeur moyenne de la fonction harmonique.

8. Procédé selon la revendication 6 ou 7, dans lequel la fonction harmonique présente une somme de fonctions sinusoïdales dont les fréquences sont des multiples de la fréquence de la fonction sinusoidale à la fréquence la plus basse, le nombre des fonctions sinusoïdales étant supérieur à zéro et inférieur à une valeur maximale prédéterminée.

9. Procédé selon l'une des revendications 6 à 8, dans lequel la surface est la face latérale du pneu de véhicule, et l'anomalie de forme est un voilage du pneu.

10. Procédé selon l'une des revendications 6 à 8, dans lequel la surface est la surface de roulement d'un pneu de véhicule, et l'anomalie de forme est un battement frontal du pneu de véhicule.

11. Procédé pour caractériser une irrégularité localement délimitée (21a, 21 b, 22a, 22b) sur une surface (20), aux étapes suivantes consistant à:
caractériser la surface selon la revendication 1, pour obtenir une représentation incomplète de la surface qui ne présente que des informations relatives à l'anomalie de forme et pas d'informations relatives à l'irrégularité localement délimitée;
compléter (55) la représentation incomplète à l'aide des valeurs de la représentation incomplète, pour obtenir une représentation complétée;
soustraire (65) de la représentation originale la représentation complétée, pour obtenir une représentation d'irrégularités comportant uniquement des informations relatives à l'irrégularité localement délimitée;
classifier (75) l'irrégularité sur base de son extension, hauteur et/ou forme géométrique.

12. Procédé selon la revendication 11, dans lequel, à l'étape de complétion (55), une fonction analytique est adaptée à la ligne de hauteur incomplète.

13. Procédé selon la revendication 11, dans lequel est effectuée, à l'étape de complétion (55), une interpolation de premier ordre et/ou d'un ordre supérieur.

14. Dispositif pour caractériser une surface (20) présentant une irrégularité localement délimitée (21a, 21b, 22a, 22b), aux caractéristiques suivantes:
un dispositif destiné à générer (10) une pluralité de lignes de hauteur adjacentes de la surface, pour générer une représentation de hauteur bidimensionnelle de la surface, une ligne de hauteur de la surface étant générée en fonction d'une variable d'emplacement (ϕ), et la représentation de hauteur bidimensionnelle comprenant une multitude de points d'image comprenant, chacun, une hauteur;
un dispositif destiné à détecter (12) l'irrégularité localement délimitée (21a, 21b, 22a, 22b) dans la représentation de hauteur bidimensionnelle, où, à l'étape de détection (12), le dispositif destiné à détecter
fournit une représentation de variation à partir de la représentation de hauteur pour les points d'image de la représentation de hauteur bidimensionnelle (50), la représentation de variation pour les points d'image de la représentation de hauteur bidimensionnelle comprenant respectivement une valeur qui indique une différence de hauteur entre points d'image adjacents de la représentation bidimensionnelle, la valeur pour un point d'image étant une valeur du vecteur de gradient au point d'image ou étant une variation du point d'image qui est calculée à partir d'une somme des carrés de différence des hauteurs entre le point d'image et les points d'image adjacents au point d'image,
détecte, à l'aide d'un seuil de variation, des irrégularités localement délimitées par des bords, et
détecte, à l'aide du seuil de variation, des irrégularités localement délimitées sensiblement sans bords (52); et
un dispositif destiné à éliminer (14) de la représentation de hauteur les irrégularités délimitées par des bords détectées et les irrégularités sensiblement sans bord détectées, de sorte qu'il soit obtenu une représentation incomplète de la surface qui caractérise la surface sans irrégularité localement délimitée.

15. Dispositif pour déterminer une anomalie de forme d'une surface présentant une irrégularité localement délimitée qui ne doit pas être déterminée comme anomalie de forme, aux caractéristiques suivantes:
un dispositif destiné à caractériser (50) la surface selon la revendication 14, pour obtenir une représentation incomplète de la surface ne présentant que des informations relatives à l'anomalie de forme et pas d'informations relatives à l'irrégularité localement délimitée;
un dispositif destiné à adapter (62) une fonction analytique à la surface incomplète;
un dispositif destiné à comparer (70) un maximum de la fonction analytique avec une valeur de seuil prédéterminée; et
un dispositif destiné à déterminer (80) une anomalie de forme, lorsque le maximum excède la valeur de seuil.

16. Dispositif pour caractériser une irrégularité localement délimitée (21a, 21b, 22a, 22b) sur une surface (20), aux caractéristiques suivantes:
un dispositif destiné à caractériser la surface selon la revendication 14, pour obtenir une représentation incomplète de la surface ne présentant que des informations relatives à l'anomalie de forme et pas d'informations relatives à l'irrégularité localement délimitée;
un dispositif destiné à compléter (55) la représentation incomplète à l'aide des valeurs de la représentation incomplète, pour obtenir une représentation complétée;
un dispositif destiné à soustraire (65) de la représentation originale la représentation complétée, pour obtenir une représentation d'irrégularité comprenant uniquement des informations relatives à l'irrégularité localement délimitée;
un dispositif destiné à classifier (75) l'irrégularité sur base de son extension, hauteur et/ou forme géométrique.

17. Procédé pour déterminer une anomalie de forme d'une surface (20) présentant une irrégularité délimitée localement qui ne doit pas être déterminée comme anomalie de forme, aux étapes suivantes consistant à:
caractériser (50) la surface, pour obtenir une représentation incomplète de la surface qui ne présente que des informations relatives à l'anomalie de forme et pas d'informations relatives à l'irrégularité localement délimitée, ladite caractérisation (50) comprenant:
créer (10) une pluralité de lignes de hauteur adjacentes de la surface, pour créer une représentation de hauteur bidimensionnelle de la surface, une ligne de hauteur de la surface étant créée en fonction d'une variable d'emplacement (ϕ);
détecter (12) l'irrégularité localement délimitée (21a, 21b, 22a, 22b) dans la représentation de hauteur bidimensionnelle, où l'étape de détection (12) comprend
créer une représentation de variation à partir de la représentation de hauteur (50),
détecter les irrégularités délimitées localement par des bords à l'aide d'un seuil de variation, et
détecter les irrégularités délimitées localement essentiellement sans bord à l'aide du seuil de variation (52); et
éliminer (14) les irrégularités délimitées par des bords détectées et les irrégularités délimitées essentiellement sans bord détectées de la représentation de hauteur, de sorte qu'il soit obtenu une représentation incomplète de la surface qui caractérise la surface sans l'irrégularité délimitée localement;
adapter (62) une fonction analytique à la surface incomplète;
comparer (70) un maximum de la fonction analytique avec une valeur de seuil prédeterminée;
déterminer (80) une anomalie de forme, lorsque le maximum excède la valeur de seuil.

18. Procédé pour caractériser une irrégularité localement délimitée (21a, 21 b, 22a, 22b) sur une surface (20), aux étapes suivantes consistant à:
caractériser la surface, pour obtenir une représentation incomplète de la surface qui ne présente que des informations relatives à l'anomalie de forme et pas d'informations relatives à l'irrégularité localement délimitée, ladite caractérisation (50) comprenant:
créer (10) une pluralité de lignes de hauteur adjacentes de la surface, pour créer une représentation de hauteur bidimensionnelle de la surface, une ligne de hauteur de la surface étant créée en fonction d'une variable d'emplacement (ϕ);
détecter (12) l'irrégularité localement délimitée (21a, 21b, 22a, 22b) dans la représentation de hauteur bidimensionnelle, où l'étape de détection (12) comprend
créer une représentation de variation à partir de la représentation de hauteur (50),
détecter les irrégularités délimitées localement par des bords à l'aide d'un seuil de variation, et
détecter les irrégularités délimitées localement essentiellement sans bord à l'aide du seuil de variation (52); et
éliminer (14) les irrégularités délimitées par des bords détectées et les irrégularités délimitées localement essentiellement sans bord détectées de la représentation de hauteur, de sorte qu'il soit obtenu une représentation incomplète de la surface qui caractérise la surface sans l'irrégularité délimitée localement;
compléter (52) la représentation incomplète à l'aide des valeurs de la représentation incomplète, pour obtenir une représentation complétée;
soustraire (65) de la représentation originale la représentation complétée, pour obtenir une représentation d'irrégularités comportant uniquement des informations relatives à l'irrégularité localement délimitée; et
classifier (75) l'irrégularité sur base de son extension, hauteur et/ou forme géométrique.

19. Dispositif pour déterminer une anomalie de forme d'une surface présentant une irrégularité localement délimitée qui ne doit pas être déterminée comme anomalie de forme, aux caractéristiques suivantes:
un dispositif destiné à caractériser (50) la surface, pour obtenir une représentation incomplète de la surface ne présentant que des informations relatives à l'anomalie de forme et pas d'informations relatives à l'irrégularité localement délimitée, ladite caractérisation (50) comprenant:
créer (10) une pluralité de lignes de hauteur adjacentes de la surface, pour créer une représentation de hauteur bidimensionnelle de la surface, une ligne de hauteur de la surface étant créée en fonction d'une variable d'emplacement (ϕ);
détecter (12) l'irrégularité localement délimitée (21a, 21b, 22a, 22b) dans la représentation de hauteur bidimensionnelle, où l'étape de détection (12) comprend
créer une représentation de variation à partir de la représentation de hauteur (50),
détecter les irrégularités délimitées localement par des bords à l'aide d'un seuil de variation, et
détecter les irrégularités délimitées localement essentiellement sans bord à l'aide du seuil de variation (52); et
éliminer (14) les irrégularités délimitées par des bords détectées et les irrégularités délimitées essentiellement sans bord détectées de la représentation de hauteur, de sorte qu'il soit obtenu une représentation incomplète de la surface qui caractérise la surface sans l'irrégularité délimitée localement;
un dispositif destiné à adapter (62) une fonction analytique à la surface incomplète;
un dispositif destiné à comparer (70) un maximum de la fonction analytique avec une valeur de seuil prédéterminée; et
un dispositif destiné à déterminer (80) une anomalie de forme, lorsque le maximum excède la valeur de seuil.

20. Dispositif pour caractériser une irrégularité localement délimitée (21a, 21b, 22a, 22b) sur une surface (20), aux caractéristiques suivantes:
un dispositif destiné à caractériser la surface, pour obtenir une représentation incomplète de la surface ne présentant que des informations relatives à l'anomalie de forme et pas d'informations relatives à l'irrégularité localement délimitée, ladite caractérisation (50) comprenant:
créer (10) une pluralité de lignes de hauteur adjacentes de la surface, pour créer une représentation de hauteur bidimensionnelle de la surface, une ligne de hauteur de la surface étant créée en fonction d'une variable d'emplacement (ϕ);
détecter (12) l'irrégularité localement délimitée (21a, 21b, 22a, 22b) dans la représentation de hauteur bidimensionnelle, où l'étape de détection (12) comprend
créer une représentation de variation à partir de la représentation de hauteur (50),
détecter les irrégularités délimitées localement par des bords à l'aide d'un seuil de variation, et
détecter les irrégularités délimitées localement essentiellement sans bord à l'aide du seuil de variation (52); et
éliminer (14) les irrégularités délimitées par des bords détectées et les irrégularités délimitées essentiellement sans bord détectées de la représentation de hauteur, de sorte qu'il soit obtenu une représentation incomplète de la surface qui caractérise la surface sans l'irrégularité délimitée localement;
un dispositif destiné à compléter (52) la représentation incomplète à l'aide des valeurs de la représentation incomplète, pour obtenir une représentation complétée;
un dispositif destiné à soustraire (65) de la représentation originale la représentation complétée, pour obtenir une représentation d'irrégularités comportant uniquement des informations relatives à l'irrégularité localement délimitée; et
un dispositif destiné à classifier (75) l'irrégularité sur base de son extension, hauteur et/ou forme géométrique.
